# EUROPEAN PATENT SPECIFICATION

(11) **EP 4 125 199 B1**
(45) Date of publication and mention of the grant of the patent: **03.01.2024**
(21) Application number: 22187928.1
(22) Date of filing: 29.07.2022
(51) Int. Cl.: H02M 1/00, H02M 3/335, H02M 3/00

(54) **CONVERTER AND CONVERTER CONTROL METHOD**
UMRICHTER UND UMRICHTERSTEUERUNGSVERFAHREN
CONVERTISSEUR ET PROCÉDÉ DE COMMANDE DE CONVERTISSEUR

(30) Priority: 31.07.2021 CN 202110877270
(43) Date of publication of application: 01.02.2023
(73) Proprietor: Huawei Digital Power Technologies Co., Ltd., Shenzhen, 518043 (CN)
(72) Inventor: YANG, Gun, Shenzhen 518129 (CN)
(74) Representative: Gill Jennings & Every LLP

(56) References cited:
- CN-A- 111 262 444
- US-A1- 2019 229 634
- US-A1- 2019 393 767
- DONG HANJING ET AL: "A New CCM/DCM Hybrid-Mode Synchronous Rectification Flyback Converter", IEEE TRANSACTIONS ON INDUSTRIAL ELECTRONICS, IEEE SERVICE CENTER, PISCATAWAY, NJ, USA, vol. 67, no. 5, 7 June 2019 (2019-06-07), pages 3629-3639, XP011769962, ISSN: 0278-0046, DOI: 10.1109/TIE.2019.2920474 [retrieved on 2020-02-03]

## Description

### TECHNICAL FIELD

Implementations of this application relate to the field of power supply technologies, and in particular, to a converter and a converter control method.

### BACKGROUND

An asymmetric half-bridge flyback circuit is used as a main circuit of a charger, so that a circuit structure of the charger may be simplified, and efficiency of the charger may be improved. The asymmetric half-bridge flyback circuit includes a primary-side circuit, a transformer, and a secondary-side circuit. An exciting inductor is charged by controlling turn-on of two switching transistors in a half-bridge structure in the primary-side circuit, and energy is provided for the secondary-side circuit by using the transformer. The secondary-side circuit has a synchronous rectifier diode, which has a rectification function.

With the development of consumer electronics, an adapter is also developing rapidly. Based on requirements of sustainable development and energy saving and emission reduction, currently, a requirement for an adapter loss, such as level VI energy efficiency or California energy efficiency, is gradually tightened in various countries and regions, and it is emphasized that power consumption of the adapter should be low in a case of a light load. Therefore, how to reduce the power consumption of the adapter in the case of a light load becomes an urgent problem to be resolved.

US 2019/0229634 A1 relates to adaptive control of synchronous rectifier switching device The control circuit is configured to control the synchronous rectifier switch based on a counted number of valleys of an oscillating voltage of the synchronous rectifier in a first switching cycle. If the counted number of valleys exceeds a threshold, light-load operation is decided, and the synchronous rectifier is controlled to be turned on using a smaller gate control voltage in a next switching cycle.
US2019393767A1 relates to systems for and methods of synchronous rectification in a switching power converter.

### SUMMARY

Implementations of this application provide a converter and a converter control method, to control an on/off status of a rectifier diode in a next cycle based on an oscillating voltage of the rectifier diode in a current switching cycle, so that the converter turns off the rectifier diode in a case of no load or a light load. In this way, a drive loss of the rectifier diode may be reduced, thereby reducing power consumption of the entire converter.

The invention has been defined in the independent claims. Further specific technical features have been defined in the dependent claims.

### BRIEF DESCRIPTION OF DRAWINGS

FIG. 1 is a schematic diagram of a structure of a converter according to an implementation of this application;
FIG. 2 is a schematic diagram of a structure of an asymmetric half-bridge flyback circuit according to an implementation of this application;
FIG. 3 is a schematic diagram of a structure of a detection circuit according to an implementation of this application;
FIG. 4 is a waveform graph of a drive signal according to an implementation of this application;
FIG. 5 is a schematic flowchart of a converter control method according to an implementation of this application;
FIG. 6 is a schematic diagram of a structure of a converter according to an implementation of this application;
FIG. 7 is a schematic diagram of a structure of another converter according to an implementation of this application;
FIG. 8 is a schematic diagram of a structure of another converter according to an implementation of this application; and
FIG. 9 is a schematic flowchart of another converter control method according to an implementation of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those that comprise at least all the features of an independent claim. Any implementation that does not fall within the scope of the claims does not form part of the invention, but rather included as an illustrative example that is useful for understanding the invention.

Implementations of this application provide a converter and a converter control method, to control an on/off status of a rectifier diode in a next cycle based on an oscillating voltage at both ends of the rectifier diode in a current switching cycle, so that the converter turns off the rectifier diode in a case of no load or a light load. In this way, a drive loss of the rectifier diode may be reduced, thereby reducing power consumption of the entire converter.

The converter is a component that changes, based on a specific purpose, information sent by a signal source. In the implementations of this application, the converter may refer to a power adapter, which is used in a plurality of voltage conversion scenarios. To improve efficiency of the converter and simplify a circuit structure, an existing converter usually uses an asymmetric half-bridge flyback circuit as a main circuit of the converter to complete conversion between voltages. The converter that uses a design of the asymmetric half-bridge flyback circuit has advantages such as a simple structure, high conversion efficiency, and low electromagnetic interference.

The asymmetric half-bridge flyback circuit is configured to convert a direct current provided by a direct current power supply into a direct current that meets a requirement, and provide the converted direct current for a load. The load connected to the asymmetric half-bridge flyback circuit may be heavy, null, or light. Based on requirements of sustainable development and energy saving and emission reduction, currently, a requirement for an adapter loss is gradually tightened, and it is emphasized that power consumption of the adapter should be low in a case of a light load. Therefore, how to determine a load situation corresponding to the converter and reduce power consumption of the converter as much as possible in a case of a light load based on the load situation becomes an urgent problem to be resolved.

Based on the foregoing problem, the implementations of this application provide a converter and a converter control method. A load situation corresponding to a circuit is determined by detecting an oscillating voltage of a rectifier diode. When it is determined that a load is null or very light, the rectifier diode is controlled to be turned on in a next switching cycle. In this way, a drive loss of the rectifier diode and a normal power supply loss of a drive control circuit may be reduced, thereby effectively reducing power consumption of an entire converter system.

The oscillating voltage of the rectifier diode refers to a voltage difference between two ends of the rectifier diode. After specifications of components of the converter are determined, a rated output current and a rated output voltage of the converter are also determined. A load corresponding to the converter may be light or heavy. Generally, the load is heavier when an output current corresponding to the load is larger. For example, when the output current corresponding to the load is greater than half of the rated output current, the load may be considered as a heavy load. When the output current corresponding to the load is less than half of the rated output current, the load may be considered as a light load. It may be understood that division of a heavy load and a light load should be determined based on an actual application scenario, and is not specifically limited.

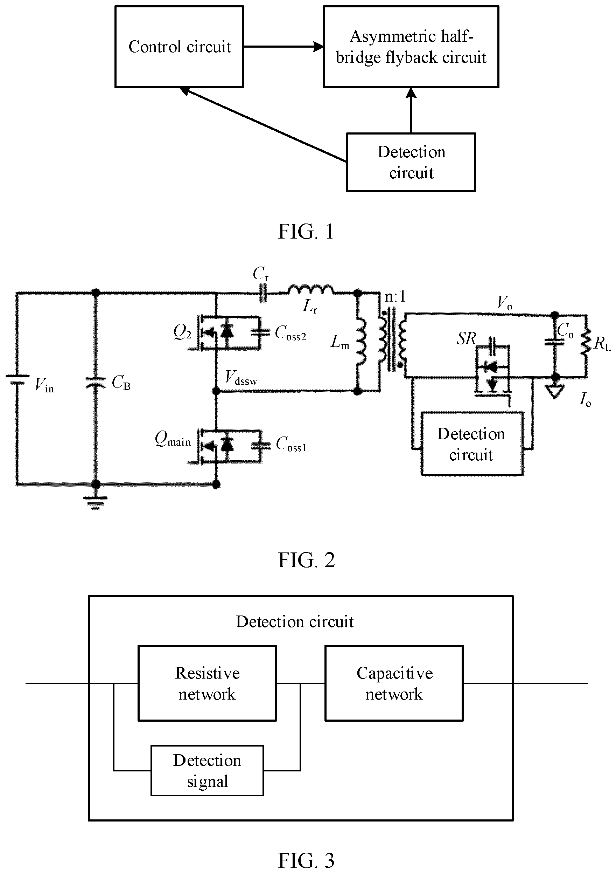

FIG. 1 is a schematic diagram of a structure of a converter according to an implementation of this application. As shown in FIG. 1, the converter includes an asymmetric half-bridge flyback circuit, a control circuit, and a detection circuit. The asymmetric half-bridge flyback circuit is a main circuit of the converter, and is configured to implement voltage conversion and supply power to a load. The control circuit is configured to control turn-on and turn-off of switching transistors in the asymmetric half-bridge flyback circuit, implement conversion between a direct current and an alternating current by using turn-on and turn-off of the switching transistors, and drive the asymmetric half-bridge flyback circuit to transmit electric energy. The detection circuit is configured to detect a voltage at both ends of a rectifier diode in the asymmetric half-bridge flyback circuit, and feed back a detection result to the control circuit, so that the control circuit may control on/off statuses of the transistors based on the feedback result.

The following describes in detail circuit modules included in the converter.

FIG. 2 is a schematic diagram of a structure of an asymmetric half-bridge flyback circuit according to an implementation of this application. As shown in FIG. 2, a circuit connected to a primary-side winding of a transformer may be referred to as a primary-side circuit, and a circuit connected to a secondary-side winding of the transformer may be referred to as a secondary-side circuit. The primary-side circuit includes a direct current power supply Vin, a first filter capacitor *C_{B}* , a switching transistor Q1, a switching transistor Q2, and a resonant capacitor Cr. Vin, the switching transistor Q1, and the switching transistor Q2 are connected in series, and *C_{B}* is connected in parallel at both ends of Vin. Cr is connected to the primary-side winding of the transformer, and a formed series loop is connected in parallel at both ends of the switching transistor Q2. That is, one end of the resonant capacitor Cr is connected to a first end of Q2, the other end of the resonant capacitor Cr is connected to a first end of the primary-side winding, and a second end of the primary-side winding is connected to a second end of Q2.

The secondary-side circuit includes a rectifier diode SR and a second filter capacitor Co, where the rectifier diode SR may be a synchronous rectifier diode and corresponds to a parasitic diode. The secondary-side circuit is configured to provide electric energy for a load. Therefore, two ends of the filter capacitor Co are input ends of the entire converter, and are connected to the load RL. The secondary-side circuit further includes a detection circuit. The detection circuit is connected in parallel at both ends of SR, and is configured to detect a voltage at both ends of the rectifier diode SR.

The detection circuit is connected in parallel at both ends of the rectifier diode SR, and is configured to detect a voltage difference between the two ends of the rectifier diode SR, that is, the voltage of the rectifier diode SR, and feed back a detection result to the control circuit, so that the control circuit controls a subsequent on/off status of the rectifier diode SR based on the feedback result. FIG. 3 is a schematic diagram of a structure of a detection circuit according to an implementation of this application. As shown in FIG. 3, the detection circuit includes a resistive network and a capacitive network, and a voltage situation at both ends of SR may be learned of by detecting voltage signals Vdec at both ends of the resistive network.

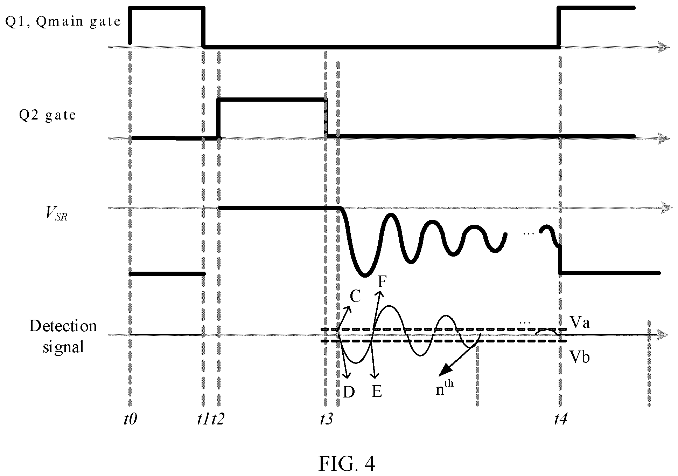

The following describes a working principle of the asymmetric half-bridge flyback circuit. The switching transistors Q1 and Q2 are respectively driven by different pulse width modulated signals, to control on/off statuses of the switching transistors Q1 and Q2. Q1 is driven by a first pulse width modulated signal, and Q2 is driven by a second pulse width modulated signal that lags behind the first pulse width modulated signal by a dead time. FIG. 4 is a waveform graph of a drive signal according to an implementation of this application. As shown in FIG. 4, the first pulse width modulated signal is a driving waveform of the main switching transistor Q1, the second pulse width modulated signal is a driving waveform of the auxiliary switching transistor Q2, VSR is a waveform of the voltage at both ends of the rectifier diode SR, Vdec is a waveform of a detection signal during voltage detection, and Ilm is a waveform of an exciting current corresponding to the transformer.

The second pulse width modulated signal lags behind the first pulse width modulated signal by a dead time. That is, a time segment from t1 to t2 is the dead time. Both the first pulse width modulated signal and the second pulse width modulated signal are periodic square waves, and one switching cycle is from a starting position of a square wave to a starting position of a next adjacent square wave in the first pulse width modulated signal. That is, t1 to t4 is one switching cycle. It can be seen that one switching cycle includes one pulse signal in the first pulse width modulated signal and one pulse signal in the second pulse width modulated signal. That is, Q1 and Q2 are each turned on once in one switching cycle.

In one switching cycle, a time from t0 to t1 is a turn-on time of Q1, and Q2 is turned off. This time segment is a magnetization phase of the transformer. The direct current power supply Vin provides a direct current, and energy is stored to Cr and an exciting inductor Lm included in the transformer by using the switching transistor Q1. The exciting current Ilm rises accordingly.

In the time segment from t1 to t2, Q1 is turned off, and at this time, Q2 is not turned on. A voltage at both ends of the auxiliary switching transistor Q2 decreases, to implement zero-voltage switch turn-on. That is, when Q2 is turned on, the voltage at both ends of Q2 is zero. In this way, a switching loss of the auxiliary switching transistor Q2 may be minimized, and efficiency of the asymmetric half-bridge flyback circuit may be improved.

A time segment from t2 to t3 is a demagnetization phase of the transformer. At this time, Q2 is turned off, and Q1 is turned on. Electric energy stored by Cr and Lm begins to be transmitted to the secondary-side circuit. Therefore, the exciting current Ilm begins to decrease, until the exciting current Ilm decreases to zero. At the same time, if the load is heavy, the secondary-side circuit begins to provide electric energy for the load. The rectifier diode SR is turned on, rectifies an alternating current induced by the secondary-side winding, to obtain a direct current, and provides the direct current for the load.

It may be understood that when the load is light or null, the secondary-side circuit does not need to supply power to the load. If the rectifier diode SR is still turned on in this case, a drive loss of the synchronous rectifier diode and a normal power supply loss of a drive control circuit inevitably increase, resulting in an unnecessary loss. Therefore, if a load situation of the secondary-side circuit can be sensed, the on/off status of SR is controlled based on the load situation, so that SR is turned off when the load is light. In this way, a power supply loss may be greatly reduced, and a power consumption requirement of the converter in a case of a light load is ensured, so that efficiency of the entire converter is improved.

In a phase from t3 to t4, both Q1 and Q2 are in an off state. If the load is light, the exciting inductor Lm and a leakage inductor Lr resonate with Cr. In this case, if the load is light or null, the voltage at both ends of the rectifier diode oscillates, and the waveform of the voltage is VSR shown in FIG. 3. When the load is heavy, the voltage at both ends of the rectifier diode rapidly decreases, and no oscillation phenomenon occurs. Based on this circuit characteristic, the detection circuit may detect the voltage at both ends of the rectifier diode SR in the phase from t3 to t4 in a current switching cycle, to determine whether a load corresponding to the converter is light or heavy. Then, based on a determining result, an on/off status of the rectifier diode in a next switching cycle is controlled. Specifically, when the detection circuit determines, based on the voltage at both ends of the rectifier diode SR in the phase from t3 to t4 in the current switching cycle, that the load corresponding to the converter is light, the control circuit may control, based on the detection result, the rectifier diode SR to be in an off state in the next switching cycle, and no rectification is required. In this way, the drive loss of the rectifier diode and the normal power supply loss of the drive control circuit may be reduced, thereby reducing a loss of the converter.

After t4, the next switching cycle begins, the transformer begins to be magnetized, the exciting current Ilm rises, and the capacitor Cr and the exciting inductor Lm begin to store energy. Then, demagnetization begins again. A process is the same as the phases from t1 to t4. Details are not described herein.

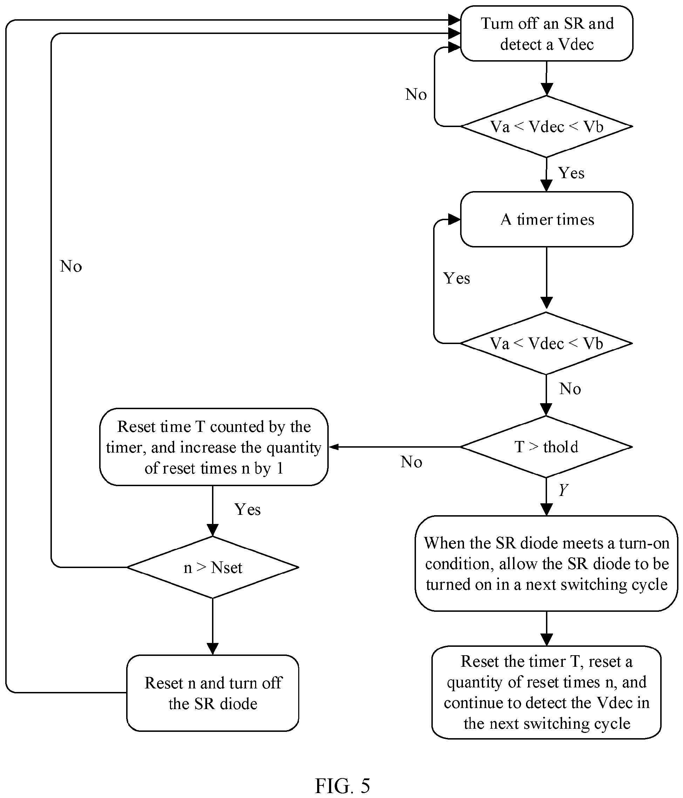

Based on the foregoing description, the following describes in detail a process of determining, based on the voltage at both ends of the rectifier diode SR in the phase from t3 to t4, whether the load corresponding to the converter is light or heavy, to control the on/off status of the rectifier diode SR in the next switching cycle. FIG. 5 is a schematic flowchart of a converter control method according to an implementation of this application. As shown in FIG. 5, in the phase from t3 to t4 in the current switching cycle, that is, when both the switching transistors Q1 and Q2 are in the off state, SR in the secondary-side circuit is first turned off, and the detection circuit begins to detect the voltage at both ends of SR. Then, the load situation is determined by determining whether the voltage at both ends of SR oscillates and oscillation intensity (a quantity of oscillation times). Finally, the on/off status of SR in the next switching cycle is controlled based on the determined load situation.

First, two voltage thresholds, that is, a first voltage threshold Va and a second voltage threshold Vb, need to be determined. Va is less than Vb, and Va and Vb determine a relatively small voltage range. It may be understood that if the voltage difference between the two ends of SR remains between Va and Vb for a long time, and a difference between voltage values of Va and Vb is very small, it indicates that the voltage at both ends of SR is smooth and tends to be stable, and no violent oscillation occurs in the secondary-side circuit. In this case, the load is heavy. SR needs to be turned on in a time segment from t2 to t3 in the next switching cycle, to implement a rectification function and provide energy for the load.

When the voltage difference between the two ends of SR fluctuates beyond Va and Vb, it indicates that the secondary-side circuit oscillates. In this case, the quantity of oscillation times needs to be further determined, and the oscillation intensity is determined by using the quantity of oscillation times, to further determine the load situation. The quantity of oscillation times is a quantity of times that the voltage at both ends of SR crosses a voltage area specified by Va and Vb. When the quantity of oscillation times meets a preset threshold, it indicates that the load corresponding to the secondary-side circuit is null or very light. In this case, SR may be controlled to be turned off in the next switching cycle.

A specific determining process may be shown in FIG. 5. First, when Q1 and Q2 are turned off, SR is turned off, and a voltage value of SR is detected. Then, the voltage value at both ends of SR is monitored, and timing starts when the voltage value is between Va and Vb. It may be understood that there may be two cases. If an oscillation direction of an oscillating voltage is from a valley to a peak at the beginning, a timer starts timing when the voltage value of SR reaches Va for a first time and stops timing when the voltage value of SR reaches Vb for a first time. If the oscillation direction of the oscillating voltage is from a peak to a valley at the beginning, the timer starts timing when the voltage value of SR reaches Vb for a first time and stops timing when the voltage value of SR reaches Va for a first time. Then, it is determined that a counted time exceeds a preset time threshold thold. If the counted time exceeds the preset time threshold thold, it indicates that the voltage of SR remains stable between Va and Vb for a long time, and because an oscillation process is an energy attenuation process, it indicates that the voltage of SR tends to be stable in a subsequent time segment. Therefore, the load corresponding to the secondary-side circuit is heavy. In this case, it indicates that SR may be turned on in the next switching cycle, and a turn-on condition is met. In this case, the timer needs to be reset, and SR is controlled to be turned on in the next switching cycle. After demagnetization of the transformer in the next switching cycle is completed, SR is turned off again, a voltage value of SR is determined, and turn-on or turn-off of SR in a further next switching cycle is determined based on a determining result.

If the counted time exceeds the preset time threshold thold, it indicates that the voltage of SR violently oscillates, and the quantity of oscillation times needs to be further determined. Specifically, the timer needs to be reset, and a quantity of reset times of the timer needs to be updated. Each time the timer is reset, the quantity of reset times of the timer needs to be increased by 1. Then, the voltage of SR continues to be determined. When the voltage reaches a range between Va and Vb, the timer performs timing again. Whether a newly counted time exceeds the preset time threshold thold is determined, and the foregoing process continues to be repeated. Timing stops after the newly counted time exceeds the preset time threshold thold, and the quantity n of reset times of the timer is determined as the quantity of oscillation times of the oscillating voltage of SR. Finally, whether the quantity n of oscillation times exceeds a preset quantity of times Nset is determined. If the quantity n of oscillation times exceeds the preset quantity of times Nset, it indicates that the load corresponding to the circuit is null or very light, and a rectifier diode turn-off condition is met. In this case, the control circuit needs to control the rectifier diode to be turned off in the next switching cycle. If the quantity n of oscillation times does not exceed the preset quantity of times Nset, it indicates that the load is not null or not very light, and the rectifier diode still needs to perform rectification to provide electric energy for the load. Therefore, the control circuit needs to ensure that the rectifier diode is turned on in the next switching cycle when the first switching transistor is turned on.

For example, after SR is turned off, the voltage of SR begins to be detected. Timing starts when the voltage of SR is between Va and Vb, and timing stops when the voltage exceeds Va or Vb. As shown in FIG. 3, timing starts when VSR reaches a point C, and timing stops when VSR reaches a point D. Then, whether a counted time exceeds the preset time threshold thold is determined. If the counted time exceeds the preset time threshold thold, it indicates that the voltage of SR is stable, and no violent oscillation occurs in the circuit. Therefore, a detection process may be ended, and it is determined that SR needs to be turned on in a transformer demagnetization phase in the next cycle, to provide a direct current for the load. If the counted time does not exceed the preset time threshold thold, it indicates that the circuit violently oscillates. In this case, the timer needs to be reset for next timing, and the quantity of reset times needs to be updated. When VSR reaches a point E shown in FIG. 3, second timing continues to start. When VSR reaches a point F, second timing stops. Then, whether a time counted in second timing exceeds the preset time threshold thold is further determined. If the time exceeds the preset time threshold thold, the timer is reset again, the quantity of reset times is updated (the quantity of reset times is increased by 1), and an entire timing process is ended. If the time does not exceed the preset time threshold thold, the foregoing process continues to be repeated until a time counted in n^{th} timing exceeds the preset time threshold thold, and the entire timing process is ended. Finally, whether the quantity n of reset times exceeds the preset quantity of times Nset is determined. If the quantity n of reset times exceeds the preset quantity of times Nset, it indicates that the quantity of oscillation times is large, and the load corresponding to the circuit is light or null. In this case, the control circuit needs to control the rectifier diode SR to be turned off in the next switching cycle, to reduce the drive loss of SR. If the quantity n of reset times does not exceed the preset quantity of times Nset, it indicates that oscillation is not violent and the load is heavy. Therefore, the control circuit needs to ensure that the rectifier diode SR is turned on in the next switching cycle when the first switching transistor is turned on. Specifically, SR is controlled to be turned on in a transformer demagnetization phase in the next cycle, to rectify the secondary-side circuit, and provide a direct current for the load.

In the foregoing converter, when the transformer demagnetization phase ends and both the main switching transistor and the auxiliary switching transistor are turned off, the detection circuit detects the voltage of the rectifier diode in the secondary-side circuit, and the load situation is determined by monitoring and determining the voltage. Specifically, when the voltage of the rectifier diode is the oscillating voltage and the quantity of oscillation times exceeds the preset threshold, it may be considered that the load corresponding to the converter is light. Then, based on the conclusion, the control circuit may control the on/off status of the rectifier diode in the next switching cycle, and control the rectifier diode not to be turned on in the next switching cycle, so that the drive loss of the rectifier diode and the normal power supply loss of the drive circuit may be reduced, thereby ensuring that the converter has a small loss when the load is light, and improving efficiency of an entire converter system.

It may be understood that the foregoing control method may be applied not only to the converter using the asymmetric half-bridge flyback circuit as the main circuit, but also to another converter. A control principle of the converter is similar to the control principle shown in the foregoing implementation: An oscillation situation of the voltage is determined based on the voltage of the rectifier diode SR in the secondary-side circuit in the current switching cycle, and then the on/off status of SR in the next switching cycle is determined based on a determining result. If oscillation is violent, and the quantity of oscillation times of the oscillating voltage exceeds the preset quantity of times, SR is not allowed to be turned on in the next switching cycle, to reduce the drive loss of SR. If the voltage of SR tends to be stable, and the quantity of oscillation times of the oscillating voltage does not exceed the preset quantity of times, the control circuit needs to control SR to be turned on in the next switching cycle. For specific details, refer to the implementations shown in FIG. 2 to FIG. 4, and details are not described herein.

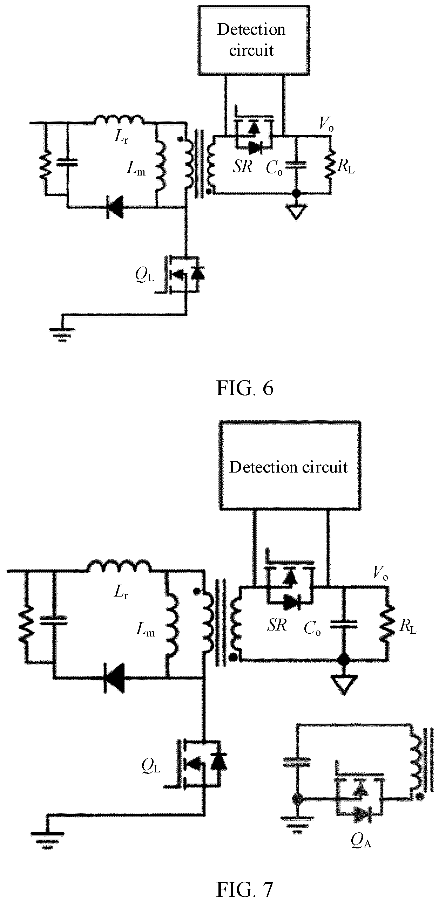

For example, the control method may be applied to a converter using a quasi-resonant flyback circuit as a main circuit. FIG. 6 is a schematic diagram of a structure of a converter according to an implementation of this application. The converter includes a resistor, a capacitor, a diode, a transformer, a switching transistor, a secondary-side circuit, and a detection circuit. A direct current power supply is connected at both ends of the capacitor. The direct current power supply, a primary-side winding of the transformer, and the switching transistor are connected in series. The capacitor is connected in series to the diode. A first end of the capacitor is connected to a first end of the transformer, a second end of the diode is connected to a second end of the transformer, and the resistor is connected in parallel at both ends of the capacitor.

The secondary-side circuit includes a rectifier diode and a filter capacitor. The rectifier diode, a secondary -side winding of the transformer, and the filter capacitor are connected in series, and two ends of the filter capacitor are output ends of the secondary-side circuit. Similarly, in one switching cycle, the switching transistor is turned on once. When a transformer demagnetization phase ends, and a corresponding exciting current is zero, the secondary-side circuit oscillates if a load RL is light. The detection circuit is configured to detect a voltage at both ends of the rectifier diode SR in the secondary-side circuit. A specific structure is the same as the structure of the detection circuit shown in FIG. 3, and also includes a resistive network and a capacitive network. Details are not described herein.

The converter further includes a control circuit, and the control circuit controls the switching transistor to be turned on or off. The control circuit is further configured to control, based on a quantity of oscillation times of an oscillating voltage of the rectifier diode in a current switching cycle, the rectifier diode to be turned on or off in a next switching cycle. Specifically, if the quantity of oscillation times exceeds a preset quantity of times, the rectifier diode is controlled to be turned off in the next switching cycle. If the quantity of oscillation times does not exceed the preset quantity of times, the rectifier diode is allowed to be turned on in the next switching cycle, to rectify the secondary-side circuit, and provide a direct current for the load.

For example, the control method may also be applied to a converter using an asymmetric zero-voltage switch AZVS circuit as a main circuit. FIG. 7 is a schematic diagram of a structure of a converter according to an implementation of this application. The circuit includes a resistor, a first capacitor, a second capacitor, a diode, a transformer, a first switching transistor QL, a second switching transistor QA, a secondary-side circuit, and a detection circuit. A primary-side winding of the transformer is connected to a direct current power supply, and is connected in series to the first switching transistor QL. The capacitor is connected in series to the diode. A first end of the capacitor is connected to a first end of the transformer, a second end of the diode is connected to a second end of the transformer, and the resistor is connected in parallel at both ends of the capacitor.

The second switching transistor QA is connected in series to the second capacitor, and is connected in series to an auxiliary winding of the transformer. A first end of the second capacitor is connected to a first end of the auxiliary winding, a second end of the second capacitor is connected to a first end of the second switching transistor, a second end of the auxiliary winding is connected to a second end of the second switching transistor, and the second end of the second capacitor is grounded.

The secondary-side circuit includes a rectifier diode SR and a filter capacitor. The rectifier diode SR, a secondary-side winding of the transformer, and the filter capacitor are connected in series, and two ends of the filter capacitor are output ends of the secondary-side circuit. In one switching cycle, the switching transistor QL is turned on once. When a current corresponding to the transformer is zero, the secondary-side circuit oscillates if a load RL is light. The detection circuit is configured to detect a voltage at both ends of the rectifier diode SR in the secondary-side circuit. A specific structure is the same as the structure of the detection circuit shown in FIG. 3, and also includes a resistive network and a capacitive network. Details are not described herein.

The converter further includes a control circuit, and the control circuit controls the switching transistor to be turned on or off. The control circuit is further configured to control, based on a quantity of oscillation times of an oscillating voltage of the rectifier diode in a current switching cycle, the rectifier diode to be turned on or off in a next switching cycle. Specifically, if the quantity of oscillation times exceeds a preset quantity of times, the rectifier diode is controlled to be turned off in the next switching cycle. If the quantity of oscillation times does not exceed the preset quantity of times, the rectifier diode is to be turned on in the next switching cycle, to rectify the secondary-side circuit, and provide a direct current for the load.

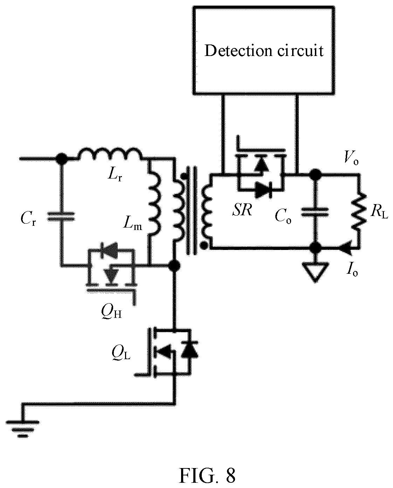

For example, the control method may also be applied to a converter using an active clamp flyback topology as a main circuit. FIG. 8 is a schematic diagram of a structure of a converter according to an implementation of this application. The circuit includes a first switching transistor QH, a second switching transistor QL, a resonant capacitor Cr, a transformer, a secondary-side circuit, and a detection circuit. The secondary-side circuit is connected to a secondary-side winding of the transformer.

One end of the resonant capacitor Cr is connected to a direct current power supply, and the direct current power supply, the resonant capacitor Cr, the first switching transistor QH, and the second switching transistor QL are connected in series. A first end of the resonant capacitor Cr is connected to a first end of the direct current power supply, and a second end of the resonant capacitor Cr is connected to a first end of the first switching transistor QH. A first end of the transformer is connected to the first end of the resonant capacitor Cr, and a second end of the transformer is connected to a second end of the first switching transistor QH. The secondary-side circuit includes a rectifier diode SR and a parasitic diode corresponding to the rectifier diode.

The first switching transistor QH is controlled to be turned on or off by a first drive signal, and the second switching transistor QL is controlled to be turned on or off by a second drive signal. The first drive signal is a pulse width signal, and the second drive signal is a pulse width signal that lags behind the first drive signal by a dead time. In one switching cycle, the first switching transistor and the second switching transistor are each turned on once. When a current corresponding to the transformer is zero, the secondary-side circuit oscillates if a load RL is light. The detection circuit is configured to detect a voltage at both ends of the rectifier diode SR in the secondary-side circuit. A specific structure is the same as the structure of the detection circuit shown in FIG. 3, and also includes a resistive network and a capacitive network. Details are not described herein.

The converter further includes a control circuit. The control circuit controls, based on a quantity of oscillation times of an oscillating voltage of the rectifier diode in a current switching cycle, the rectifier diode to be turned on or off in a second switching cycle. If the quantity of oscillation times exceeds a preset quantity of times, the rectifier diode is controlled to be turned off in the next switching cycle. If the quantity of oscillation times does not exceed the preset quantity of times, the rectifier diode is allowed to be turned on in the next switching cycle, to rectify the secondary-side circuit, and provide a direct current for the load.

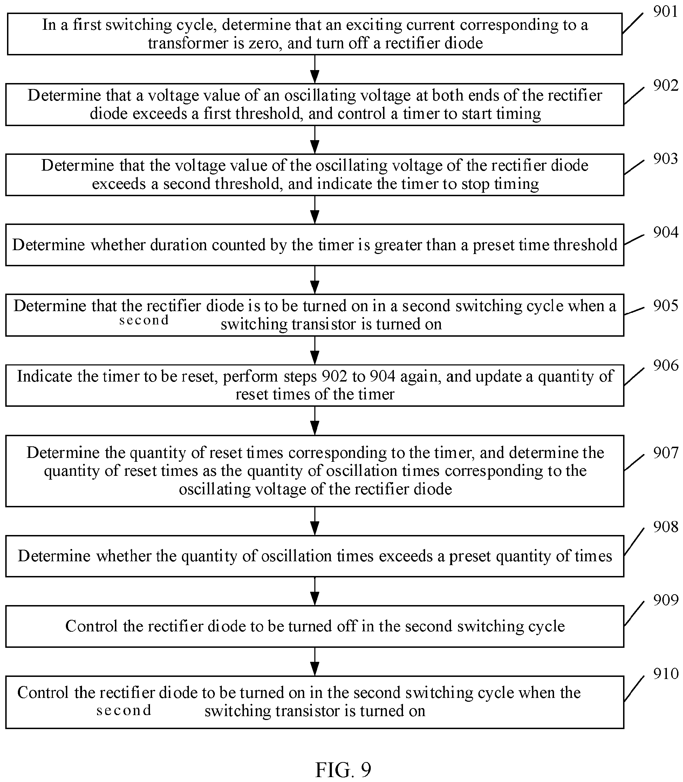

FIG. 9 is a schematic flowchart of a converter control method according to an implementation of this application. The control method is based on the transformer structure provided in the implementations shown in FIG. 3 to FIG. 4, and includes several steps.

901: In a first switching cycle, determine that an exciting current corresponding to a transformer is zero, and turn off a rectifier diode.

A converter includes a primary-side circuit connected to a primary-side winding of the transformer and a secondary-side circuit connected to a secondary-side winding of the transformer. The primary-side circuit includes a magnetization phase and a demagnetization phase. The magnetization phase is a time from t0 to t1. At this time, Q1 is turned on, and Q2 is turned off. A direct current power supply Vin provides a direct current, and energy is stored to Cr and an exciting inductor Lm included in the transformer by using the switching transistor Q1. The exciting current Ilm rises randomly. The demagnetization phase is a time segment from t2 to t3. At this time, Q2 is turned on, and Q1 is turned off. Electric energy stored by Cr and Lm begins to be transmitted to the secondary-side circuit. Therefore, the exciting current Ilm begins to decrease, until the exciting current Ilm decreases to zero. When the exciting current of the transformer decreases to zero, the rectifier diode of the secondary-side circuit is turned off, and a voltage at both ends of the rectifier diode is detected by using a detection circuit.

902: Determine that a voltage value of an oscillating voltage at both ends of the rectifier diode exceeds a first threshold, and control a timer to start timing.

The voltage value at both ends of SR is monitored, duration in which the voltage at both ends of SR is between the first threshold Va and a second threshold Vb is determined, and an oscillation situation of the secondary-side circuit is determined based on the duration, to analyze a load situation. Specifically, timing may be performed when the voltage value of the oscillating voltage exceeds the first threshold and enters a range between Va and Vb. Therefore, whether the voltage value of the oscillating voltage exceeds the first threshold needs to be monitored.

It may be understood that there may be two cases. If an oscillation direction of the oscillating voltage is from a valley to a peak at the beginning, the timer starts timing when the voltage value at both ends of SR reaches Va for a first time and stops timing when the voltage value at both ends of SR reaches Vb for a first time. If the oscillation direction of the oscillating voltage is from a peak to a valley at the beginning, the timer starts timing when the voltage value at both ends of SR reaches Vb for a first time and stops timing when the voltage value at both ends of SR reaches Va for a first time.

903: Determine that the voltage value of the oscillating voltage of the rectifier diode exceeds the second threshold, and indicate the timer to stop timing.

It may be understood that, when the oscillating voltage at both ends of the rectifier diode enters a voltage range between Va and Vb for a first time, the timer needs to count duration in which the oscillating voltage at both ends of the rectifier diode remains in the range, and the oscillation situation of the secondary-side circuit is determined based on the duration.

904: Determine whether the duration counted by the timer is greater than a preset time threshold. If the duration counted by the timer is greater than the preset time threshold, perform step 905, or if the duration counted by the timer is less than the preset time threshold, perform step 906.

After timing is completed, it is determined whether a counted time exceeds a preset time threshold thold. If the counted time exceeds the preset time threshold thold, it indicates that the voltage at both ends of SR remains stable between Va and Vb for a long time, and because an oscillation process is an energy attenuation process, it indicates that the voltage at both ends of SR tends to be stable in a subsequent time segment. Therefore, a load corresponding to the secondary-side circuit is heavy. In this case, it indicates that SR may be turned on in a next switching cycle, and a turn-on condition is met. In this case, a control circuit may allow the rectifier diode to be turned on in the next switching cycle, and control SR to be turned on when a transformer demagnetization phase arrives in the next switching cycle, so that SR rectifies the secondary-side circuit to provide a direct current for the heavy load.

It may be understood that, after demagnetization of the transformer in the next switching cycle is completed, SR needs to be turned off again, a voltage value at both ends of SR needs to be determined, and turn-on or turn-off of SR in a next switching cycle of the next switching cycle is determined based on a determining result.

905: Determine that the rectifier diode is to be turned on in a second switching cycle when the second switching transistor is turned on.

The second switching cycle is a next switching cycle adjacent to the first switching cycle.

906: Indicate the timer to be reset, perform steps 902 to 904 again, and update a quantity of reset times of the timer.

If the duration counted by the timer is less than the preset time threshold, a quantity of oscillation times of the oscillating voltage needs to be determined. In this case, the timer needs to be reset for next timing, and the quantity of reset times needs to be updated. When VSR enters the range between Va and Vb again, second timing continues to start. Then, whether a time counted in second timing exceeds the preset time threshold thold is further determined. If the time exceeds the preset time threshold thold, the timer is reset again, the quantity of reset times is updated (the quantity of reset times is increased by 1), and an entire timing process is ended. If the time does not exceed the preset time threshold thold, the foregoing process continues to be repeated until a time counted in n^{th} timing exceeds the preset time threshold thold, and the entire timing process is ended.

907: Determine the quantity of reset times corresponding to the timer, and determine the quantity of reset times as the quantity of oscillation times corresponding to the oscillating voltage of the rectifier diode.

Finally, the finally counted quantity n of reset times needs to be determined as the quantity of oscillation times, and the oscillation situation of the secondary-side circuit needs to be determined based on the quantity of oscillation times.

908: Determine whether the quantity of oscillation times exceeds a preset quantity of times. If the quantity of oscillation times exceeds the preset quantity of times, perform step 909, or if the quantity of oscillation times does not exceed the preset quantity of times, perform step 910.

Whether n exceeds the preset quantity of times Nset is determined. If n exceeds the preset quantity of times Nset, it indicates that the quantity of oscillation times is large, and the load corresponding to the circuit is light or null. In this case, the control circuit needs to control the rectifier diode SR to be turned off in the next switching cycle, to reduce a drive loss of SR. If n does not exceed the preset quantity of times Nset, it indicates that oscillation is not violent and the load is heavy. Therefore, the control circuit needs to allow the rectifier diode SR to be turned on in the next switching cycle.

909: Control the rectifier diode to be turned off in the second switching cycle.

910: Control the rectifier diode to be turned on in the second switching cycle when the second switching transistor is turned on.

In the foregoing converter, when the transformer demagnetization phase ends and both the main switching transistor and the auxiliary switching transistor are turned off, the detection circuit detects the voltage at both ends of the rectifier diode in the secondary-side circuit, and the load situation is determined by monitoring and determining the voltage. Specifically, when the voltage at both ends of the rectifier diode is the oscillating voltage and the quantity of oscillation times exceeds a preset threshold, it may be considered that the load corresponding to the converter is light. Then, based on the conclusion, the control circuit may control an on/off status of the rectifier diode in the next switching cycle, and control the rectifier diode not to be turned on in the next switching cycle, so that the drive loss of the rectifier diode and a normal power supply loss of a drive circuit may be reduced, thereby ensuring that the converter has a small loss when the load is light, and improving efficiency of an entire converter system.

An implementation of this application further provides a power adapter. The power adapter includes the converter shown in any one of the foregoing implementations.

Technical terms used in the implementations of the present disclosure are merely used to describe specific implementations, but are not intended to limit the present disclosure. In this specification, the singular forms "a", "an", and "the" are used to also include the plural forms, unless otherwise specified in the context. Further, "include" and/or "comprise" used in this specification refers to the presence of the features, wholes, steps, operations, elements, and/or components, but does not exclude the presence or addition of one or more other features, wholes, steps, operations, elements, and/or components.

The scope of protection is defined by the appended claims.

## Claims

1. A converter, wherein the converter comprises a direct current power supply (Vin), a first switching transistor (Q1, Qmain),
a second switching transistor (Q2), a resonant capacitor (Cr), a transformer, a secondary-side circuit, and a control circuit; and the secondary-side circuit is connected to a secondary-side winding of the transformer;
the direct current power supply, the first switching transistor, and the second switching transistor are connected in series; and a first end of the resonant capacitor is connected to a first end of the second switching transistor (Q2), a second end of the resonant capacitor is connected to a first end of the primary-side winding, and a second end of the primary-side winding is connected to a second end of the second switching transistor;
the secondary-side circuit comprises a synchronous rectifier (SR) and a parasitic diode corresponding to the synchronous rectifier;
the control circuit is configured to control the first switching transistor and the second switching transistor to be turned on or off, wherein the second switching transistor is turned on after the first switching transistor is turned off for a dead time; and an N^{th} turn-on moment of the first switching transistor to an (N+1)^{th} turn-on moment of the first switching transistor is one switching cycle, and N is a positive integer greater than or equal to 1; and
the control circuit is further configured to control, based on a quantity of oscillation times (n) of an oscillating voltage of the synchronous rectifier in a first switching cycle, the synchronous rectifier to be turned on or off in a second switching cycle, wherein the second switching cycle is a next switching cycle adjacent to the first switching cycle;
wherein the converter further comprises a detection circuit, and the detection circuit is connected in parallel to the synchronous rectifier;
the detection circuit comprises a resistive network and a capacitive network, and the resistive network and the capacitive network are connected in series; and
the detection circuit is configured to determine the oscillating voltage of the synchronous rectifier based on a voltage of the resistive network;
wherein the control circuit is configured to:
determine that the synchronous rectifier is turned off and detect the oscillating voltage of the synchronous rectifier in the first switching cycle;
determine that a voltage value of the oscillating voltage of the synchronous rectifier exceeds a first threshold (Va, Vb), and control a timer to start timing;
determine that the voltage value of the oscillating voltage of the synchronous rectifier exceeds a seconc threshold (Va, Vb), and indicate the timer to stop timing;
wherein the control circuit is configured to:
determine whether the time value (T) counted by the timer is greater than or less than a preset time threshold (thold), and
if said time value (T) counted by the timer is greater than the preset time threshold (thold), control the synchronous rectifier to be turned on in the second switching cycle when the second switching transistoi (Q2) is turned on; and
if said time value (T) counted by the timer is less than the preset time threshold (thold), reset the timer to perform re-timing after being reset, update a quantity of reset times (n) of the timer, and determine the quantity of reset times (n) as the quantity of oscillation times of the oscillating voltage at both ends of the synchronous rectifier in the first switching cycle; and
wherein the control circuit is further configured to:
control the synchronous rectifier to be turned off in the second switching cycle, if the quantity of oscillation times (n) of the oscillating voltage of the synchronous rectifier is greater than a preset quantity of times (Nset) in the first switching cycle; or
control the synchronous rectifier to be turned on in the second switching cycle when the second switching transisto (Q2) is turned on, if the quantity of oscillation times (n) of the oscillating voltage of the synchronous rectifier is less than or equal to the preset quantity of times (Nset) in the first switching cycle

2. The converter according to claim 1, wherein the converter further comprises a first filtei capacitor (C_{B}), and the first filter capacitor is connected in parallel at both ends of the direct current power supply.

3. The converter according to claim 1, wherein the secondary-side circuit further comprises a second filter (Cₒ), and the second filter capacitor is connected in series to the synchronous synchronous rectifier; and two ends of the second filter capacitor are output ends of the converter, and are configured to provide energy for a load.

4. A converter, comprising: a direct current power supply, a resistor, a capacitor, a diode, a transformer, a switching transistor (Q_{L}), a secondary-side circuit, and a control circuit, wherein
the direct current power supply, a primary-side winding of the transformer, and the switching transistor (Q_{L}) are connected in series; a first end of the capacitor is connected to a first end of the transformer, and a second end of the capacitor is connected to a first end of the diode; a second end of the diode is connected to a second end of the transformer; and the resistor is connected in parallel to two ends of the capacitor;
the secondary-side circuit comprises a synchronous rectifier (SR) and a parasitic diode corresponding to the synchronous rectifier, and a filter capacitor (Cₒ), wherein the synchronous rectifier, a secondary-side winding of the transformer, and the filter capacitor are connected in series, and two ends of the filter capacitor are output ends of the secondary-side circuit;
the control circuit is configured to control the switching transistor to be turned on or off, wherein an N^{th} turn-on moment of the switching transistor (Q_{L}) to an (N+1)^{th} turn-on moment of the switching transistor is one switching cycle, and N is a positive integer greater than or equal to 1; and
the control circuit is further configured to control, based on a quantity of oscillation times (n) of an oscillating voltage of the synchronous rectifier in a first switching cycle, the synchronous rectifier to be turned on or off in a second switching cycle, wherein the second switching cycle is a next switching cycle adjacent to the first switching cycle;
wherein the converter further comprises a detection circuit, and the detection circuit is connected in parallel to the synchronous rectifier;
the detection circuit comprises a resistive network and a capacitive network, and the resistive network and the capacitive network are connected in series; and
the detection circuit is configured to determine the oscillating voltage of the synchronous rectifier based on a voltage of the resistive network;
wherein the control circuit is configured to
determine that the synchronous rectifier is turned off and detect the oscillating voltage of the synchronous rectifier in the first switching cycle;
determine that a voltage value of the oscillating voltage of the synchronous rectifier exceeds a first threshold (Va, Vb), and control a timer to start timing;
determine that the voltage value of the oscillating voltage of the synchronous rectifier exceeds a second threshold (Va, Vb), and indicate the timer to stop timing;
wherein the control circuit is configured to:
determine whether the time (T) value counted by the timer is greater than or less than a preset time threshold (thold), and
if said time value counted by the timer is greater than the preset time threshold, control the synchronous rectifier to be turned on in the second switching cycle when the switching transistoi (Q_{L}) is turned off; and
if said time value (T) counted by the timer is less than the preset time threshold (thold), reset the timer to perform re-timing after being reset, update a quantity of reset times (n) of the timer, and determine the quantity of reset times (n) as the quantity of oscillation times of the oscillating voltage at both ends of the synchronous rectifier in the first switching cycle; and
wherein the control circuit is further configured to:
control the synchronous rectifier to be turned off in the second switching cycle, if the quantity of oscillation times (n) of the oscillating voltage of the synchronous rectifier is greater than a preset quantity of times (Nset) in the first switching cycle; or
control the synchronous rectifier to be turned on in the second switching cycle when the switching transisto (Q_{L}) is turned off, if the quantity of oscillation times (n) of the oscillating voltage of the synchronous rectifier is less than or equal to the preset quantity of times (Nset) in the first switching cycle.

5. A converter, comprising: a direct current power supply, a resistor, a first capacitor, a second capacitor, a diode, a transformer, a first switching transistor (Q_{L}), a second switching transistor (Q_{A}), a secondary-side circuit, and a control circuit, wherein
the direct current power supply, a primary-side winding of the transformer, and the first switching transistor (Q_{L}) are connected in series; a first end of the capacitor is connected to a first end of the transformer, and a second end of the capacitor is connected to a first end of the diode; a second end of the diode is connected to a second end of the transformer; and the resistor is connected in parallel to two ends of the capacitor;
the second switching transistor (Q_{A}), an auxiliary winding of the transformer, and the second capacitor are connected in series; and a first end of the second capacitor is connected to a first end of the auxiliary winding, a second end of the second capacitor is connected to a first end of the second switching transistor, a second end of the auxiliary winding is connected to a second end of the second switching transistor, and the second end of the second capacitor is grounded;
the secondary-side circuit comprises a synchronous rectifier (SR) and a parasitic diode corresponding to the synchronous rectifier, and a filter capacitor, wherein the synchronous rectifier, a secondary-side winding of the transformer, and the filter capacitor are connected in series, and two ends of the filter capacitor are output ends of the secondary-side circuit;
the control circuit is configured to control the switching transistor to be turned on or off, wherein an N^{th} turn-on moment of the switching transistor to an (N+1)^{th} turn-on moment of the switching transistor is one switching cycle, and N is a positive integer greater than or equal to 1; and
the control circuit is further configured to control, based on a quantity of oscillation times of an oscillating voltage of the synchronous rectifier in a first switching cycle, the synchronous rectifier to be turned on or off in a second switching cycle, wherein the second switching cycle is a next switching cycle adjacent to the first switching cycle;
wherein the converter further comprises a detection circuit, and the detection circuit is connected in parallel to the synchronous rectifier;
the detection circuit comprises a resistive network and a capacitive network, and the resistive network and the capacitive network are connected in series; and
the detection circuit is configured to determine the oscillating voltage of the synchronous rectifier based on a voltage of the resistive network;
wherein the control circuit is specifically configured to:
determine that the synchronous rectifier is turned off and detect the oscillating voltage of the synchronous rectifier in the first switching cycle;
determine that a voltage value of the oscillating voltage of the synchronous rectifier exceeds a first threshold (Va, Vb), and control a timer to start timing;
determine that the voltage value of the oscillating voltage of the synchronous rectifier exceeds a seconc threshold (Va, Vb), and indicate the timer to stop timing;
wherein the control circuit is configured to:
determine whether the time value (T) counted by the timer is greater than or less than a preset time threshold (thold), and
if said time value (T) counted by the timer is greater than the preset time threshold (thold), control the synchronous rectifier to be turned on in the second switching cycle when the first switching transistoi (Q_{L}) is turned off; and
if said time value (T) counted by the timer is less than the preset time threshold (thold), reset the timer to perform re-timing after being reset, update a quantity of reset times (n) of the timer, and determine the quantity of reset times (n) as the quantity of oscillation times of the oscillating voltage at both ends of the synchronous rectifier in the first switching cycle; and
wherein the control circuit is further configured to:
control the synchronous rectifier to be turned off in the second switching cycle, if the quantity of oscillation times (n) of the oscillating voltage of the synchronous rectifier is greater than a preset quantity of times (Nset) in the first switching cycle; or
control the synchronous rectifier to be turned on in the second switching cycle when the first switching transistor (Q_{L}) is turned off, if the quantity of oscillation times (n) of the oscillating voltage of the synchronous rectifier is less than or equal to the preset quantity of times (Nset) in the first switching cycle.

6. A converter, comprising a direct current power supply, a first switching transistor (Q_{L}), a second switching transistor (Q_{H}), a resonant capacitor (Cr), a transformer, a secondary-side circuit, and a control circuit, wherein the secondary-side circuit is connected to a secondary-side winding of the transformer;
the direct current power supply, the resonant capacitor, the first switching transistor, and the second switching transistor are connected in series; a first end of the resonant capacitor is connected to a first end of the direct current power supply, and a second end of the resonant capacitor is connected to a first end of the second switching transistor (Q_{H}), a first end of the transformer is connected to the first end of the resonant capacitor, and a second end of the transformer is connected to the second end of the second switching transistor (Q_{H}),
the secondary-side circuit comprises a synchronous rectifier (SR) and a parasitic diode corresponding to the synchronous rectifier;
the control circuit is configured to control the first switching transistor and the second switching transistor to be turned on or off, wherein the second switching transistor (Q_{H}) is turned on after the first switching transistor (Q_{L}) is turned off for a dead time; and an N^{th} turn-on moment of the first switching transistor to an (N+1)^{th} turn-on moment of the first switching transistor is one switching cycle, and N is a positive integer greater than or equal to 1; and
the control circuit is further configured to control, based on a quantity of oscillation times (n) of an oscillating voltage of the synchronous rectifier in a first switching cycle, the synchronous rectifier to be turned on or off in a second switching cycle, wherein the second switching cycle is a next switching cycle adjacent to the first switching cycle;
wherein the converter further comprises a detection circuit, and the detection circuit is connected in parallel to the synchronous rectifier;
the detection circuit comprises a resistive network and a capacitive network, and the resistive network and the capacitive network are connected in series; and
the detection circuit is configured to determine the oscillating voltage of the synchronous rectifier based on a voltage of the resistive network;
wherein the control circuit is specifically configured to:
determine that the synchronous rectifier is turned off and detect the oscillating voltage of the synchronous rectifier in the first switching cycle;
determine that a voltage value of the oscillating voltage of the synchronous rectifier exceeds a first threshold (Va, Vb), and control a timer to start timing;
determine that the voltage value of the oscillating voltage of the synchronous rectifier exceeds a seconc threshold (Va, Vb), and indicate the timer to stop timing;
wherein the control circuit is configured to:
determine whether the time value (T) counted by the timer is greater than or less than a preset time threshold (thold), and
if said time value (T) counted by the timer is greater than the preset time threshold (thold), control the synchronous rectifier to be turned on in the second switching cycle when the first switching transistoi (Q_{L}) is turned off, and
if said time value (T) counted by the timer is less than the preset time threshold (thold), reset the timer to perform re-timing after being reset, update a quantity of reset times (n) of the timer, and determine the quantity of reset times (n) as the quantity of oscillation times of the oscillating voltage at both ends of the synchronous rectifier in the first switching cycle; and
wherein the control circuit is further configured to:
control the synchronous rectifier to be turned off in the second switching cycle, if the quantity of oscillation times (n) of the oscillating voltage of the synchronous rectifier is greater than a preset quantity of times (Nset) in the first switching cycle; or
control the synchronous rectifier to be turned on in the second switching cycle when the first switching transistor (Q_{L}) is turned off, if the quantity of oscillation times (n) of the oscillating voltage of the synchronous rectifier is less than or equal to the preset quantity of times (Nset) in the first switching cycle.

7. A converter control of controlling a converter of claim 1, wherein the first switching transistor and the second switching transistor are controlled to be turned on or off, wherein the second switching transistor (Q₂) is turned on after the first switching transistor (Qmain) is turned off for a dead time, and an N^{th} turn-on moment of the first switching transistor to an (N+1)^{th} turn-on moment of the second switching transistor is one switching cycle, N being a positive integer greater than or equal to 1, and wherein a second switching cycle is a next switching cycle adjacent to a first switching cycle; the method comprising: detecting a quantity of oscillation times (n) of an oscillating voltage at both ends of the synchronous rectifier (SR) in the first switching cycle by:
determining that the synchronous rectifier is turned off and detecting the oscillating voltage of the synchronous rectifier in a first switching cycle;
determining that a voltage value of the oscillating voltage at two sides of the synchronous rectifier exceeds a first threshold (Va, Vb), and controlling a timer to start timing;
determining that the voltage value of the oscillating voltage at two sides of the synchronous rectifier exceeds a second threshold (Va, Vb), and indicating the timer to stop timing;
wherein the method comprises:
determining whether the time value (T) counted by the timer is greater than or less than a preset time threshold (thold), and
if said time value (T) counted by the timer is greater than the preset time threshold (thold), controlling the synchronous rectifier to be turned on in the second switching cycle when the second switching transistor (Q₂) is turned on; and
if said time value (T) counted by the timer is less than the preset time threshold (thold), resetting the timer to perform re-timing after being reset, updating a quantity of reset times (n) of the timer, and determining the quantity of reset times (n) as the quantity of oscillation times of the oscillating voltage at both ends of the synchronous rectifier in the first switching cycle; and
wherein the method further comprises:
controlling the synchronous rectifier to be turned off in the second switching cycle, if the quantity of oscillation times (n) of the oscillating voltage of the synchronous rectifier is greater than a preset quantity of times (Nset) in the first switching cycle; or
controlling the synchronous rectifier to be turned on in the second switching cycle when the second switching transistor (Q₂) is turned on, if the quantity of oscillation times (n) of the oscillating voltage of the synchronous rectifier is less than or equal to the preset quantity of times (Nset) in the first switching cycle.

8. A power adapter, wherein the power adapter comprises the converter according to any one of claims 1 to 6.

## Patentansprüche

1. Umrichter, wobei der Umrichter eine Gleichstromversorgung (Vin), einen ersten Schalttransistor (Q1, Qmain),
einen zweiten Schalttransistor (Q2), einen Resonanzkondensator (Cr), einen Transformator, eine sekundärseitige Schaltung und eine Steuerschaltung umfasst; und wobei die sekundärseitige Schaltung mit einer sekundärseitigen Wicklung des Transformators verbunden ist;
wobei die Gleichstromversorgung, der erste Schalttransistor und der zweite Schalttransistor in Reihe geschaltet sind; und wobei ein erstes Ende des Resonanzkondensators mit einem ersten Ende des zweiten Schalttransistors (Q2), ein zweites Ende des Resonanzkondensators mit einem ersten Ende der primärseitigen Wicklung und ein zweites Ende der primärseitigen Wicklung mit einem zweiten Ende des zweiten Schalttransistors verbunden ist; wobei die sekundärseitige Schaltung einen Synchrongleichrichter (SR) und eine dem Synchrongleichrichter entsprechende parasitäre Diode umfasst;
wobei die Steuerschaltung dazu konfiguriert ist, den ersten Schalttransistor und den zweiten Schalttransistor so zu steuern, dass sie ein- oder ausgeschaltet werden, wobei der zweite Schalttransistor eingeschaltet wird, nachdem der erste Schalttransistor für eine Stillstandszeit ausgeschaltet wurde; und ein N^{-ter} Einschaltzeitpunkt des ersten Schalttransistors bis zu einem (N+1)^{-ten} Einschaltzeitpunkt des ersten Schalttransistors ein Schaltzyklus ist, und N eine positive ganze Zahl größer oder gleich 1 ist; und
wobei die Steuerschaltung ferner dazu konfiguriert ist, auf Grundlage einer Anzahl von Schwingungszeiten (n) einer Schwingungsspannung des Synchrongleichrichters in einem ersten Schaltzyklus den Synchrongleichrichter so zu steuern, dass der Synchrongleichrichter in einem zweiten Schaltzyklus ein- oder ausgeschaltet wird, wobei der zweite Schaltzyklus ein nächster Schaltzyklus ist, der an den ersten Schaltzyklus angrenzt; wobei der Wandler ferner eine Erkennungsschaltung umfasst und die Erkennungsschaltung parallel zu dem Synchrongleichrichter geschaltet ist;
wobei die Erkennungsschaltung ein Widerstandsnetzwerk und ein kapazitives Netzwerk umfasst und das Widerstandsnetzwerk und das kapazitive Netzwerk in Reihe geschaltet sind; und
wobei die Erkennungsschaltung dazu konfiguriert ist, die Schwingungsspannung des Synchrongleichrichters auf Grundlage einer Spannung des Widerstandsnetzwerks zu bestimmen;
wobei die Steuerschaltung zu Folgendem konfiguriert ist:
Bestimmen, dass der Synchrongleichrichter ausgeschaltet ist, und Erkennen der Schwingungsspannung des Synchrongleichrichters in dem ersten Schaltzyklus;
Bestimmen, dass ein Spannungswert der Schwingungsspannung des Synchrongleichrichters einen ersten Schwellenwert (Va, Vb) überschreitet, und Steuern eines Zeitgebers, um die Zeitmessung zu starten;
Bestimmen, dass der Spannungswert der Schwingungsspannung des Synchrongleichrichters einen zweiten Schwellenwert (Va, Vb) überschreitet, und dem Zeitgeber anzeigen, dass die Zeitmessung zu stoppen ist;
wobei die Steuerschaltung zu Folgendem konfiguriert ist:
Bestimmen, ob der von dem Zeitgeber gezählte Zeitwert (T) größer oder kleiner als ein voreingestellter Zeitschwellenwert (thold) ist, und
wenn der von dem Zeitgeber gezählte Zeitwert (T) größer als der voreingestellte Zeitschwellenwert (thold) ist, Steuern des Synchrongleichrichters, sodass er in dem zweiten Schaltzyklus eingeschaltet wird, wenn der zweite Schalttransistor (Q2) eingeschaltet ist; und
wenn der von dem Zeitgeber gezählte Zeitwert (T) kleiner als der voreingestellte Zeitschwellenwert (thold) ist, Zurücksetzen des Zeitgebers, um nach dem Zurücksetzen eine erneute Zeitmessung durchzuführen, Aktualisieren einer Anzahl von Rücksetzzeiten (n) des Zeitgebers und Bestimmen der Anzahl der Rücksetzzeiten (n) als Anzahl der Schwingungszeiten der Schwingungsspannung an beiden Enden des Synchrongleichrichters im ersten Schaltzyklus; und
wobei die Steuerschaltung ferner zu Folgendem konfiguriert ist: Steuern des Synchrongleichrichters sodass er im zweiten Schaltzyklus ausgeschaltet wird, wenn die Anzahl der Schwingungszeiten (n) der Schwingungsspannung des Synchrongleichrichters größer als eine voreingestellte Anzahl von Malen (Nset) im ersten Schaltzyklus ist; oder
den Synchrongleichrichter so zu steuern, dass er in dem zweiten Schaltzyklus eingeschaltet wird, wenn der zweite Schalttransistor (Q2) eingeschaltet ist, wenn die Anzahl der Schwingungszeiten (n) der Schwingungsspannung des Synchrongleichrichters kleiner als oder gleich der voreingestellten Anzahl von Zeiten (Nset) im ersten Schaltzyklus ist.

2. Umrichter nach Anspruch 1, wobei der Umrichter ferner einen ersten Filterkondensator (C_{B}) umfasst und der erste Filterkondensator an beiden Enden der Gleichstromversorgung parallel geschaltet ist.

3. Umrichter nach Anspruch 1, wobei die sekundärseitige Schaltung ferner einen zweiten Filter (Cₒ) umfasst und der zweite Filterkondensator in Reihe mit dem synchronen Synchrongleichrichter geschaltet ist; und
wobei zwei Enden des zweiten Filterkondensators Ausgangsenden des Umrichters und dazu konfiguriert sind, Energie für eine Last bereitzustellen.

4. Umrichter, umfassend: eine Gleichstromversorgung, einen Widerstand, einen Kondensator, eine Diode, einen Transformator, einen Schalttransistor (Q_{L}), eine sekundärseitige Schaltung und eine Steuerschaltung, wobei
die Gleichstromversorgung, eine primärseitige Wicklung des Transformators und der Schalttransistor (Q_{L}) in Reihe geschaltet sind; ein erstes Ende des Kondensators mit einem ersten Ende des Transformators verbunden ist und ein zweites Ende des Kondensators mit einem ersten Ende der Diode verbunden ist; ein zweites Ende der Diode mit einem zweiten Ende des Transformators verbunden ist; und der Widerstand parallel zu zwei Enden des Kondensators geschaltet ist;
die sekundärseitige Schaltung einen Synchrongleichrichter (SR) und eine dem Synchrongleichrichter entsprechende parasitäre Diode sowie einen Filterkondensator (Cₒ) umfasst, wobei der Synchrongleichrichter eine sekundärseitige Wicklung des Transformators und der Filterkondensator sind in Reihe geschaltet und zwei Enden des Filterkondensators sind Ausgangsenden der sekundärseitigen Schaltung;
wobei die Steuerschaltung dazu konfiguriert ist, den Schalttransistor so zu steuern, dass er ein- oder ausgeschaltet wird, wobei ein N^{-ter} Einschaltzeitpunkt des Schalttransistors (Q_{L}) bis zu einem (N+1)^{-ten} Einschaltzeitpunkt des Schalttransistors ein Schaltzyklus ist und N eine positive ganze Zahl größer oder gleich 1 ist; und
wobei die Steuerschaltung ferner dazu konfiguriert ist, auf Grundlage einer Anzahl von Schwingungszeiten (n) einer Schwingungsspannung des Synchrongleichrichters in einem ersten Schaltzyklus den Synchrongleichrichter so zu steuern, dass der Synchrongleichrichter in einem zweiten Schaltzyklus ein- oder ausgeschaltet wird, wobei der zweite Schaltzyklus ein nächster Schaltzyklus ist, der an den ersten Schaltzyklus angrenzt; wobei der Wandler ferner eine Erkennungsschaltung umfasst und die Erkennungsschaltung parallel zu dem Synchrongleichrichter geschaltet ist;
wobei die Erkennungsschaltung ein Widerstandsnetzwerk und ein kapazitives Netzwerk umfasst und das Widerstandsnetzwerk und das kapazitive Netzwerk in Reihe geschaltet sind; und
wobei die Erkennungsschaltung dazu konfiguriert ist, die Schwingungsspannung des Synchrongleichrichters auf Grundlage einer Spannung des Widerstandsnetzwerks zu bestimmen;
wobei die Steuerschaltung zu Folgendem konfiguriert ist:
Bestimmen, dass der Synchrongleichrichter ausgeschaltet ist, und Erkennen der Schwingungsspannung des Synchrongleichrichters in dem ersten Schaltzyklus;
Bestimmen, dass ein Spannungswert der Schwingungsspannung des Synchrongleichrichters einen ersten Schwellenwert (Va, Vb) überschreitet, und Steuern eines Zeitgebers, um die Zeitmessung zu starten;
Bestimmen, dass der Spannungswert der Schwingungsspannung des Synchrongleichrichters einen zweiten Schwellenwert (Va, Vb) überschreitet, und dem Zeitgeber anzeigen, dass die Zeitmessung zu stoppen ist;
wobei die Steuerschaltung zu Folgendem konfiguriert ist:
Bestimmen, ob der von dem Zeitgeber gezählte Zeitwert (T) größer oder kleiner als ein voreingestellter Zeitschwellenwert (thold) ist, und
wenn der von dem Zeitgeber gezählte Zeitwert größer als der voreingestellte Zeitschwellenwert ist, Steuern des Synchrongleichrichters, sodass er in dem zweiten Schaltzyklus eingeschaltet wird, wenn der Schalttransistor (Q_{L}) eingeschaltet ist; und
wenn der von dem Zeitgeber gezählte Zeitwert (T) kleiner als der voreingestellte Zeitschwellenwert (thold) ist, Zurücksetzen des Zeitgebers, um nach dem Zurücksetzen eine erneute Zeitmessung durchzuführen, Aktualisieren einer Anzahl von Rücksetzzeiten (n) des Zeitgebers und Bestimmen der Anzahl der Rücksetzzeiten (n) als Anzahl der Schwingungszeiten der Schwingungsspannung an beiden Enden des Synchrongleichrichters im ersten Schaltzyklus; und
wobei die Steuerschaltung ferner zu Folgendem konfiguriert ist: Steuern des Synchrongleichrichters sodass er im zweiten Schaltzyklus ausgeschaltet wird, wenn die Anzahl der Schwingungszeiten (n) der Schwingungsspannung des Synchrongleichrichters größer als eine voreingestellte Anzahl von Malen (Nset) im ersten Schaltzyklus ist; oder
den Synchrongleichrichter so zu steuern, dass er in dem zweiten Schaltzyklus eingeschaltet wird, wenn der Schalttransistor (Q_{L}) ausgeschaltet ist, wenn die Anzahl der Schwingungszeiten (n) der Schwingungsspannung des Synchrongleichrichters kleiner als oder gleich der voreingestellten Anzahl von Zeiten (Nset) im ersten Schaltzyklus ist.

5. Umrichter, umfassend: eine Gleichstromversorgung, einen Widerstand, einen ersten Kondensator, einen zweiten Kondensator, eine Diode, einen Transformator, einen ersten Schalttransistor (Q_{L}), einen zweiten Schalttransistor (Q_{A}),
eine sekundärseitige Schaltung und eine Steuerschaltung,
wobei
die Gleichstromversorgung, eine primärseitige Wicklung des Transformators und der erste Schalttransistor (Q_{L}) in Reihe geschaltet sind; ein erstes Ende des Kondensators mit einem ersten Ende des Transformators verbunden ist und ein zweites Ende des Kondensators mit einem ersten Ende der Diode verbunden ist; ein zweites Ende der Diode mit einem zweiten Ende des Transformators verbunden ist; und der Widerstand parallel zu zwei Enden des Kondensators geschaltet ist;
der zweite Schalttransistor (Q_{A}),
eine Hilfswicklung des Transformators und der zweite Kondensator in Reihe geschaltet sind; und ein erstes Ende des zweiten Kondensators mit einem ersten Ende der Hilfswicklung verbunden ist, ein zweites Ende des zweiten Kondensators mit einem ersten Ende des zweiten Schalttransistors verbunden ist, ein zweites Ende der Hilfswicklung mit einem zweiten Ende des zweiten Schalttransistors verbunden ist, und das zweite Ende des zweiten Kondensators geerdet ist;
die sekundärseitige Schaltung einen Synchrongleichrichter (SR) und eine dem Synchrongleichrichter entsprechende parasitäre Diode sowie einen Filterkondensator umfasst, wobei der Synchrongleichrichter, eine sekundärseitige Wicklung des Transformators und der Filterkondensator in Reihe geschaltet sind und zwei Enden des Filterkondensators Ausgangsenden der sekundärseitigen Schaltung sind;
die Steuerschaltung so konfiguriert ist, dass sie den Schalttransistor so steuert, dass er ein- oder ausgeschaltet wird, wobei ein N^{-ter} Einschaltmoment des Schalttransistors bis zu einem (N+1)^{-ten} Einschaltmoment des Schalttransistors ein Schaltzyklus beträgt und N eine positive ganze Zahl größer oder gleich 1 ist; und
wobei die Steuerschaltung ferner dazu konfiguriert ist, auf Grundlage einer Anzahl von Schwingungszeiten einer Schwingungsspannung des Synchrongleichrichters in einem ersten Schaltzyklus so zu steuern, dass der Synchrongleichrichter in einem zweiten Schaltzyklus ein- oder ausgeschaltet wird, wobei der zweite Schaltzyklus ein nächster Schaltzyklus ist, der an den ersten Schaltzyklus angrenzt;
wobei der Wandler ferner eine Erkennungsschaltung umfasst und die Erkennungsschaltung parallel zu dem Synchrongleichrichter geschaltet ist;
wobei die Erkennungsschaltung ein Widerstandsnetzwerk und ein kapazitives Netzwerk umfasst und das Widerstandsnetzwerk und das kapazitive Netzwerk in Reihe geschaltet sind; und
wobei die Erkennungsschaltung dazu konfiguriert ist, die Schwingungsspannung des Synchrongleichrichters auf Grundlage einer Spannung des Widerstandsnetzwerks zu bestimmen;
wobei die Steuerschaltung spezifisch zu Folgendem konfiguriert ist:
Bestimmen, dass der Synchrongleichrichter ausgeschaltet ist, und
Erkennen der Schwingungsspannung des Synchrongleichrichters in dem ersten Schaltzyklus;
Bestimmen, dass ein Spannungswert der Schwingungsspannung des Synchrongleichrichters einen ersten Schwellenwert (Va, Vb) überschreitet, und Steuern eines Zeitgebers, um die Zeitmessung zu starten;
Bestimmen, dass der Spannungswert der Schwingungsspannung des Synchrongleichrichters einen zweiten Schwellenwert (Va, Vb) überschreitet, und dem Zeitgeber anzeigen, dass die Zeitmessung zu stoppen ist;
wobei die Steuerschaltung zu Folgendem konfiguriert ist:
Bestimmen, ob der von dem Zeitgeber gezählte Zeitwert (T) größer oder kleiner als ein voreingestellter Zeitschwellenwert (thold) ist, und
wenn der von dem Zeitgeber gezählte Zeitwert (T) größer als der voreingestellte Zeitschwellenwert (thold) ist, Steuern des Synchrongleichrichters, sodass er in dem zweiten Schaltzyklus eingeschaltet wird, wenn der erste Schalttransistor (Q_{L}) eingeschaltet ist; und
wenn der von dem Zeitgeber gezählte Zeitwert (T) kleiner als der voreingestellte Zeitschwellenwert (thold) ist, Zurücksetzen des Zeitgebers, um nach dem Zurücksetzen eine erneute Zeitmessung durchzuführen, Aktualisieren einer Anzahl von Rücksetzzeiten (n) des Zeitgebers und Bestimmen der Anzahl der Rücksetzzeiten (n) als Anzahl der Schwingungszeiten der Schwingungsspannung an beiden Enden des Synchrongleichrichters im ersten Schaltzyklus; und
wobei die Steuerschaltung ferner zu Folgendem konfiguriert ist: Steuern des Synchrongleichrichters sodass er im zweiten Schaltzyklus ausgeschaltet wird, wenn die Anzahl der Schwingungszeiten (n) der Schwingungsspannung des Synchrongleichrichters größer als eine voreingestellte Anzahl von Malen (Nset) im ersten Schaltzyklus ist; oder
Steuern ds Synchrongleichrichters sodass er in dem zweiten Schaltzyklus eingeschaltet wird, wenn der erste Schalttransistor (Q_{L}) ausgeschaltet ist, wenn die Anzahl der Schwingungszeiten (n) der Schwingungsspannung des Synchrongleichrichters kleiner als oder gleich der voreingestellten Anzahl von Zeiten (Nset) im ersten Schaltzyklus ist.

6. Umrichter, umfassend eine Gleichstromversorgung, einen ersten Schalttransistor (Q_{L}), einen zweiten Schalttransistor (Q_{H}),
einen Resonanzkondensator (Cr),
einen Transformator, einen sekundärseitigen Schaltkreis und einen Steuerschaltkreis, wobei der sekundärseitige Schaltkreis mit einer sekundärseitigen Wicklung des Transformators verbunden ist;
wobei die Gleichstromversorgung, der Resonanzkondensator, der erste Schalttransistor und der zweite Schalttransistor in Reihe geschaltet sind; ein erstes Ende des Resonanzkondensators mit einem ersten Ende der Gleichstromversorgung verbunden ist und ein zweites Ende des Resonanzkondensators mit einem ersten Ende des zweiten Schalttransistors (Q_{H}) verbunden ist, ein erstes Ende des Transformators mit dem ersten Ende des Resonanzkondensators verbunden ist und ein zweites Ende des Transformators mit dem zweiten Ende des zweiten Schalttransistors (Q_{H}) verbunden ist,
wobei die sekundärseitige Schaltung einen Synchrongleichrichter (SR) und eine dem Synchrongleichrichter entsprechende parasitäre Diode umfasst;
wobei die Steuerschaltung dazu konfiguriert ist, den ersten Schalttransistor und den zweiten Schalttransistor so zu steuern, dass sie ein- oder ausgeschaltet werden, wobei der zweite Schalttransistor (Q_{H}) eingeschaltet wird, nachdem der erste Schalttransistor (Q_{L}) für eine Stillstandszeit ausgeschaltet wurde; und ein N^{-ter} Einschaltzeitpunkt des ersten Schalttransistors bis zu einem (N+1)^{-ten} Einschaltzeitpunkt des ersten Schalttransistors ein Schaltzyklus ist, und N eine positive ganze Zahl größer oder gleich 1 ist; und
wobei die Steuerschaltung ferner dazu konfiguriert ist, auf Grundlage einer Anzahl von Schwingungszeiten (n) einer Schwingungsspannung des Synchrongleichrichters in einem ersten Schaltzyklus den Synchrongleichrichter so zu steuern, dass der Synchrongleichrichter in einem zweiten Schaltzyklus ein- oder ausgeschaltet wird, wobei der zweite Schaltzyklus ein nächster Schaltzyklus ist, der an den ersten Schaltzyklus angrenzt; wobei der Wandler ferner eine Erkennungsschaltung umfasst und die Erkennungsschaltung parallel zu dem Synchrongleichrichter geschaltet ist;
wobei die Erkennungsschaltung ein Widerstandsnetzwerk und ein kapazitives Netzwerk umfasst und das Widerstandsnetzwerk und das kapazitive Netzwerk in Reihe geschaltet sind; und
wobei die Erkennungsschaltung dazu konfiguriert ist, die Schwingungsspannung des Synchrongleichrichters auf Grundlage einer Spannung des Widerstandsnetzwerks zu bestimmen;
wobei die Steuerschaltung spezifisch zu Folgendem konfiguriert ist:
Bestimmen, dass der Synchrongleichrichter ausgeschaltet ist, und Erkennen der Schwingungsspannung des Synchrongleichrichters in dem ersten Schaltzyklus;
Bestimmen, dass ein Spannungswert der Schwingungsspannung des Synchrongleichrichters einen ersten Schwellenwert (Va, Vb) überschreitet, und Steuern eines Zeitgebers, um die Zeitmessung zu starten;
Bestimmen, dass der Spannungswert der Schwingungsspannung des Synchrongleichrichters einen zweiten Schwellenwert (Va, Vb) überschreitet, und dem Zeitgeber anzeigen, dass die Zeitmessung zu stoppen ist;
wobei die Steuerschaltung zu Folgendem konfiguriert ist:
Bestimmen, ob der von dem Zeitgeber gezählte Zeitwert (T) größer oder kleiner als ein voreingestellter Zeitschwellenwert (thold) ist, und
wenn der von dem Zeitgeber gezählte Zeitwert (T) größer als der voreingestellte Zeitschwellenwert (thold) ist, Steuern des Synchrongleichrichters, sodass er in dem zweiten Schaltzyklus eingeschaltet wird, wenn der erste Schalttransistor (Q_{L}) eingeschaltet ist; und
wenn der von dem Zeitgeber gezählte Zeitwert (T) kleiner als der voreingestellte Zeitschwellenwert (thold) ist, Zurücksetzen des Zeitgebers, um nach dem Zurücksetzen eine erneute Zeitmessung durchzuführen, Aktualisieren einer Anzahl von Rücksetzzeiten (n) des Zeitgebers und Bestimmen der Anzahl der Rücksetzzeiten (n) als Anzahl der Schwingungszeiten der Schwingungsspannung an beiden Enden des Synchrongleichrichters im ersten Schaltzyklus; und
wobei die Steuerschaltung ferner zu Folgendem konfiguriert ist: Steuern des Synchrongleichrichters sodass er im zweiten Schaltzyklus ausgeschaltet wird, wenn die Anzahl der Schwingungszeiten (n) der Schwingungsspannung des Synchrongleichrichters größer als eine voreingestellte Anzahl von Malen (Nset) im ersten Schaltzyklus ist; oder
Steuern ds Synchrongleichrichters sodass er in dem zweiten Schaltzyklus eingeschaltet wird, wenn der erste Schalttransistor (Q_{L}) ausgeschaltet ist, wenn die Anzahl der Schwingungszeiten (n) der Schwingungsspannung des Synchrongleichrichters kleiner als oder gleich der voreingestellten Anzahl von Zeiten (Nset) im ersten Schaltzyklus ist.

7. Umrichtersteuerung zum Steuern eines Umrichters nach Anspruch 1, wobei der erste Schalttransistor und der zweite Schalttransistor so gesteuert werden, dass sie ein- oder ausgeschaltet werden, wobei der zweite Schalttransistor (Q₂) eingeschaltet wird, nachdem der erste Schalttransistor (Qmain) für eine Stillstandszeit ausgeschaltet wurde, und ein N^{-ter} Einschaltzeitpunkt des ersten Schalttransistors bis zu einem (N+1)^{-ten} Einschaltzeitpunkt des zweiten Schalttransistors ein Schaltzyklus ist, wobei N eine positive ganze Zahl größer oder gleich 1 ist, und wobei ein zweiter Schaltzyklus ein nächster Schaltzyklus ist, der an einen ersten Schaltzyklus angrenzt; wobei das Verfahren umfasst:
Erfassen einer Menge von Schwingungszeiten (n) einer Schwingungsspannung an beiden Enden des Synchrongleichrichters (SR) in dem ersten Schaltzyklus durch:
Bestimmen, dass der Synchrongleichrichter ausgeschaltet ist, und Erkennen der Schwingungsspannung des Synchrongleichrichters in dem ersten Schaltzyklus;
Bestimmen, dass ein Spannungswert der Schwingungsspannung an zwei Seiten des Synchrongleichrichters einen ersten Schwellenwert (Va, Vb) überschreitet, und Steuern eines Zeitgebers, um die Zeitmessung zu starten;
Bestimmen, dass der Spannungswert der Schwingungsspannung an zwei Seiten des Synchrongleichrichters einen zweiten Schwellenwert (Va, Vb) überschreitet, und dem Zeitgeber anzeigen, dass die Zeitmessung zu stoppen ist;
wobei das Verfahren Folgendes umfasst:
Bestimmen, ob der von dem Zeitgeber gezählte Zeitwert (T) größer oder kleiner als ein voreingestellter Zeitschwellenwert (thold) ist, und
wenn der von dem Zeitgeber gezählte Zeitwert (T) größer als der voreingestellte Zeitschwellenwert (thold) ist, Steuern des Synchrongleichrichters, sodass er in dem zweiten Schaltzyklus eingeschaltet wird, wenn der zweite Schalttransistor (Q₂) eingeschaltet ist; und
wenn der von dem Zeitgeber gezählte Zeitwert (T) kleiner als der voreingestellte Zeitschwellenwert (thold) ist, Zurücksetzen des Zeitgebers, um nach dem Zurücksetzen eine erneute Zeitmessung durchzuführen, Aktualisieren einer Anzahl von Rücksetzzeiten (n) des Zeitgebers und Bestimmen der Anzahl der Rücksetzzeiten (n) als Anzahl der Schwingungszeiten der Schwingungsspannung an beiden Enden des Synchrongleichrichters im ersten Schaltzyklus; und
wobei das Verfahren ferner umfasst:
Steuern des Synchrongleichrichters sodass er im zweiten Schaltzyklus ausgeschaltet wird, wenn die Anzahl der Schwingungszeiten (n) der Schwingungsspannung des Synchrongleichrichters größer als eine voreingestellte Anzahl von Malen (Nset) im ersten Schaltzyklus ist; oder
den Synchrongleichrichter so zu steuern, dass er in dem zweiten Schaltzyklus eingeschaltet wird, wenn der zweite Schalttransistor (Q₂) eingeschaltet ist, wenn die Anzahl der Schwingungszeiten (n) der Schwingungsspannung des Synchrongleichrichters kleiner als oder gleich der voreingestellten Anzahl von Zeiten (Nset) im ersten Schaltzyklus ist.

8. Netzteil, wobei das Netzteil den Umrichter nach einem der Ansprüche 1 bis 6 umfasst.

## Revendications

1. Convertisseur, dans lequel le convertisseur comprend une alimentation en courant continu (Vin), un premier transistor de commutation (Q1, Qmain),
un second transistor de commutation (Q2), un condensateur résonant (Cr), un transformateur, un circuit côté secondaire et un circuit de commande ; et le circuit côté secondaire est connecté à un enroulement côté secondaire du transformateur ; l'alimentation en courant continu, le premier transistor de commutation et le second transistor de commutation sont connectés en série ; et une première extrémité du condensateur résonant est connectée à une première extrémité du second transistor de commutation (Q2), une seconde extrémité du condensateur résonant est connectée à une première extrémité de l'enroulement côté primaire, et une seconde extrémité de l'enroulement côté primaire est connectée à une seconde extrémité du second transistor de commutation ;
le circuit côté secondaire comprend un redresseur synchrone (SR) et une diode parasite correspondant au redresseur synchrone ; le circuit de commande est configuré pour commander l'activation ou la désactivation du premier transistor de commutation et du second transistor de commutation, dans lequel le second transistor de commutation est activé après que le premier transistor de commutation ait été désactivé pendant un temps mort ; et un N^{ème} moment d'activation du premier transistor de commutation à un (N+1)^{ème} moment d'activation du premier transistor de commutation est un cycle de commutation, et N est un nombre entier positif supérieur ou égal à 1 ; et
le circuit de commande est en outre configuré pour commander, sur la base d'une quantité de temps d'oscillation (n) d'une tension oscillante du redresseur synchrone dans un premier cycle de commutation, le redresseur synchrone devant être activé ou désactivé dans un second cycle de commutation, dans lequel le second cycle de commutation est un cycle de commutation suivant adjacent au premier cycle de commutation ;
dans lequel le convertisseur comprend en outre un circuit de détection, et le circuit de détection est connecté en parallèle au redresseur synchrone ;
le circuit de détection comprend un réseau résistif et un réseau capacitif, et le réseau résistif et le réseau capacitif sont connectés en série ; et
le circuit de détection est configuré pour déterminer la tension oscillante du redresseur synchrone sur la base d'une tension du réseau résistif ;
dans lequel le circuit de commande est configuré pour :
déterminer que le redresseur synchrone est désactivé et détecter la tension oscillante du redresseur synchrone dans le premier cycle de commutation ;
déterminer qu'une valeur de tension de la tension oscillante du redresseur synchrone dépasse un premier seuil (Va, Vb), et commander un temporisateur pour démarrer la synchronisation ;
déterminer que la valeur de tension de la tension oscillante du redresseur synchrone dépasse un second seuil (Va, Vb), et indiquer au temporisateur d'arrêter la synchronisation ;
dans lequel le circuit de commande est configuré pour :
déterminer le fait de savoir si la valeur de temps (T) comptée par le temporisateur est supérieure ou inférieure à un seuil de temps prédéfini (thold), et
si ladite valeur de temps (T) comptée par le temporisateur est supérieure au seuil de temps prédéfini (thold), commander le redresseur synchrone pour qu'il soit activé dans le second cycle de commutation lorsque le second transistor de commutation (Q2) est activé ; et
si ladite valeur de temps (T) comptée par le temporisateur est inférieure au seuil de temps prédéfini (thold), réinitialiser le temporisateur pour réaliser une resynchronisation après avoir été réinitialisé, mettre à jour une quantité de temps de réinitialisation (n) du temporisateur, et déterminer la quantité de temps de réinitialisation (n) comme quantité de temps d'oscillation de la tension oscillante aux deux extrémités du redresseur synchrone dans le premier cycle de commutation ; et dans lequel le circuit de commande est en outre configuré pour : commander l'arrêt du redresseur synchrone lors du second cycle de commutation, si la quantité de temps d'oscillation (n) de la tension oscillante du redresseur synchrone est supérieure à une quantité prédéfinie de temps (Nset) dans le premier cycle de commutation ; ou
commander l'activation du redresseur synchrone dans le second cycle de commutation lorsque le second transistor de commutation (Q2) est activé, si la quantité de temps d'oscillation (n) de la tension oscillante du redresseur synchrone est inférieure ou égale à la quantité prédéfinie de temps (Nset) dans le premier cycle de commutation.

2. Convertisseur selon la revendication 1, dans lequel le convertisseur comprend en outre un premier condensateur de filtre (C_{B}), et le premier condensateur de filtre est connecté en parallèle aux deux extrémités de l'alimentation en courant continu.

3. Convertisseur selon la revendication 1, dans lequel le circuit côté secondaire comprend en outre un second filtre (Cₒ), et le second condensateur de filtre est connecté en série au redresseur synchrone synchrone ; et
deux extrémités du second condensateur de filtre sont des extrémités de sortie du convertisseur et sont configurées pour fournir de l'énergie à une charge.

4. Convertisseur comprenant : une alimentation en courant continu, une résistance, un condensateur, une diode, un transformateur, un transistor de commutation (Q_{L}), un circuit côté secondaire et un circuit de commande, dans lequel
l'alimentation en courant continu, un enroulement côté primaire du transformateur et le transistor de commutation (Q_{L}) sont connectés en série ; une première extrémité du condensateur est connectée à une première extrémité du transformateur, et une seconde extrémité du condensateur est connectée à une première extrémité de la diode ; une seconde extrémité de la diode est connectée à une seconde extrémité du transformateur ; et la résistance est connectée en parallèle aux deux extrémités du condensateur ;
le circuit côté secondaire comprend un redresseur synchrone (SR) et une diode parasite correspondant au redresseur synchrone, ainsi qu'un condensateur de filtre (Cₒ), dans lequel le redresseur synchrone, un enroulement côté secondaire du transformateur et le condensateur de filtre sont connectés en série, et deux extrémités du condensateur de filtre sont des extrémités de sortie du circuit côté secondaire ;
le circuit de commande est configuré pour commander l'activation ou la désactivation du transistor de commutation, dans lequel un N^{ème} moment d'activation du transistor de commutation (Q_{L}) à un (N+1)^{ème} moment d'activation du transistor de commutation est un cycle de commutation, et N est un nombre entier positif supérieur ou égal à 1 ; et
le circuit de commande est en outre configuré pour commander, sur la base d'une quantité de temps d'oscillation (n) d'une tension oscillante du redresseur synchrone dans un premier cycle de commutation, le redresseur synchrone devant être activé ou désactivé dans un second cycle de commutation, dans lequel le second cycle de commutation est un cycle de commutation suivant adjacent au premier cycle de commutation ;
dans lequel le convertisseur comprend en outre un circuit de détection, et le circuit de détection est connecté en parallèle au redresseur synchrone ;
le circuit de détection comprend un réseau résistif et un réseau capacitif, et le réseau résistif et le réseau capacitif sont connectés en série ; et
le circuit de détection est configuré pour déterminer la tension oscillante du redresseur synchrone sur la base d'une tension du réseau résistif ;
dans lequel le circuit de commande est configuré pour :
déterminer que le redresseur synchrone est désactivé et détecter la tension oscillante du redresseur synchrone dans le premier cycle de commutation ;
déterminer qu'une valeur de tension de la tension oscillante du redresseur synchrone dépasse un premier seuil (Va, Vb), et commander un temporisateur pour démarrer la synchronisation ;
déterminer que la valeur de tension de la tension oscillante du redresseur synchrone dépasse un second seuil (Va, Vb), et indiquer au temporisateur d'arrêter la synchronisation ;
dans lequel le circuit de commande est configuré pour :
déterminer le fait de savoir si la valeur de temps (T) comptée par le temporisateur est supérieure ou inférieure à un seuil de temps prédéfini (thold), et
si ladite valeur de temps comptée par le temporisateur est supérieure au seuil de temps prédéfini, commander l'activation du redresseur synchrone dans le second cycle de commutation lorsque le transistor de commutation (Q_{L}) est activé ; et
si ladite valeur de temps (T) comptée par le temporisateur est inférieure au seuil de temps prédéfini (thold), réinitialiser le temporisateur pour réaliser une resynchronisation après avoir été réinitialisé, mettre à jour une quantité de temps de réinitialisation (n) du temporisateur, et déterminer la quantité de temps de réinitialisation (n) comme quantité de temps d'oscillation de la tension oscillante aux deux extrémités du redresseur synchrone dans le premier cycle de commutation ; et dans lequel le circuit de commande est en outre configuré pour : commander l'arrêt du redresseur synchrone lors du second cycle de commutation, si la quantité de temps d'oscillation (n) de la tension oscillante du redresseur synchrone est supérieure à une quantité prédéfinie de temps (Nset) dans le premier cycle de commutation ; ou
commander l'activation du redresseur synchrone dans le second cycle de commutation lorsque le transistor de commutation (Q_{L}) est désactivé, si la quantité de temps d'oscillation (n) de la tension oscillante du redresseur synchrone est inférieure ou égale à la quantité prédéfinie de temps (Nset) dans le premier cycle de commutation.

5. Convertisseur, comprenant : une alimentation en courant continu, une résistance, un premier condensateur, un second condensateur, une diode, un transformateur, un premier transistor de commutation (Q_{L}), un second transistor de commutation (Q_{A}),
un circuit côté secondaire et un circuit de commande,
dans lequel
l'alimentation en courant continu, un enroulement côté primaire du transformateur et le premier transistor de commutation (Q_{L}) sont connectés en série ; une première extrémité du condensateur est connectée à une première extrémité du transformateur, et une seconde extrémité du condensateur est connectée à une première extrémité de la diode ; une seconde extrémité de la diode est connectée à une seconde extrémité du transformateur ; et la résistance est connectée en parallèle aux deux extrémités du condensateur ;
le second transistor de commutation (Q_{A}),
un enroulement auxiliaire du transformateur et le second condensateur sont connectés en série ; et une première extrémité du second condensateur est connectée à une première extrémité de l'enroulement auxiliaire, une seconde extrémité du second condensateur est connectée à une première extrémité du second transistor de commutation, une seconde extrémité de l'enroulement auxiliaire est connectée à une seconde extrémité du second transistor de commutation, et la seconde extrémité du second condensateur est mise à la terre ;
le circuit côté secondaire comprend un redresseur synchrone (SR) et une diode parasite correspondant au redresseur synchrone, ainsi qu'un condensateur de filtre, dans lequel le redresseur synchrone, un enroulement côté secondaire du transformateur et le condensateur de filtre sont connectés en série, et deux extrémités du condensateur de filtre sont des extrémités de sortie du circuit côté secondaire ;
le circuit de commande est configuré pour commander l'activation ou la désactivation du transistor de commutation, dans lequel un N^{ème} moment d'activation du transistor de commutation à un (N+1)^{ème} moment d'activation du transistor de commutation est un cycle de commutation, et N est un nombre entier positif supérieur ou égal à 1 ; et
le circuit de commande est en outre configuré pour commander, sur la base d'une quantité de temps d'oscillation d'une tension oscillante du redresseur synchrone dans un premier cycle de commutation, le redresseur synchrone devant être activé ou désactivé dans un second cycle de commutation, dans lequel le second cycle de commutation est un cycle de commutation suivant adjacent au premier cycle de commutation ;
dans lequel le convertisseur comprend en outre un circuit de détection, et le circuit de détection est connecté en parallèle au redresseur synchrone ;
le circuit de détection comprend un réseau résistif et un réseau capacitif, et le réseau résistif et le réseau capacitif sont connectés en série ; et
le circuit de détection est configuré pour déterminer la tension oscillante du redresseur synchrone sur la base d'une tension du réseau résistif ;
dans lequel le circuit de commande est spécifiquement configuré pour :
déterminer que le redresseur synchrone est désactivé et détecter la tension oscillante du redresseur synchrone dans le premier cycle de commutation ;
déterminer qu'une valeur de tension de la tension oscillante du redresseur synchrone dépasse un premier seuil (Va, Vb), et commander un temporisateur pour démarrer la synchronisation ;
déterminer que la valeur de tension de la tension oscillante du redresseur synchrone dépasse un second seuil (Va, Vb), et indiquer au temporisateur d'arrêter la synchronisation ;
dans lequel le circuit de commande est configuré pour :
déterminer le fait de savoir si la valeur de temps (T) comptée par le temporisateur est supérieure ou inférieure à un seuil de temps prédéfini (thold), et
si ladite valeur de temps (T) comptée par le temporisateur est supérieure au seuil de temps prédéfini (thold), commander l'activation du redresseur synchrone dans le second cycle de commutation lorsque le premier transistor de commutation (Q_{L}) est désactivé ; et
si ladite valeur de temps (T) comptée par le temporisateur est inférieure au seuil de temps prédéfini (thold), réinitialiser le temporisateur pour réaliser une resynchronisation après avoir été réinitialisé, mettre à jour une quantité de temps de réinitialisation (n) du temporisateur, et déterminer le quantité de temps de réinitialisation (n) comme quantité de temps d'oscillation de la tension oscillante aux deux extrémités du redresseur synchrone dans le premier cycle de commutation ; et dans lequel le circuit de commande est en outre configuré pour : commander l'arrêt du redresseur synchrone lors du second cycle de commutation, si la quantité de temps d'oscillation (n) de la tension oscillante du redresseur synchrone est supérieure à une quantité prédéfinie de temps (Nset) dans le premier cycle de commutation ; ou
commander l'activation du redresseur synchrone dans le second cycle de commutation lorsque le premier transistor de commutation (Q_{L}) est désactivé, si la quantité de temps d'oscillation (n) de la tension oscillante du redresseur synchrone est inférieure ou égale à la quantité prédéfinie de temps (Nset) dans le premier cycle de commutation.

6. Convertisseur, comprenant une alimentation en courant continu, un premier transistor de commutation (Q_{L}), un second transistor de commutation (Q_{H}),
un condensateur résonant (Cr),
un transformateur, un circuit côté secondaire et un circuit de commande, dans lequel le circuit côté secondaire est connecté à un enroulement côté secondaire du transformateur ; l'alimentation en courant continu, le condensateur résonnant, le premier transistor de commutation et le second transistor de commutation sont connectés en série ; une première extrémité du condensateur résonant est connectée à une première extrémité de l'alimentation en courant continu, et une seconde extrémité du condensateur résonant est connectée à une première extrémité du second transistor de commutation (Q_{H}), une première extrémité du transformateur est connectée à la première extrémité du condensateur résonnant, et une seconde extrémité du transformateur est connectée à la seconde extrémité du second transistor de commutation (Q_{H}),
le circuit côté secondaire comprend un redresseur synchrone (SR) et une diode parasite correspondant au redresseur synchrone ; le circuit de commande est configuré pour commander l'activation ou la désactivation du premier transistor de commutation et du second transistor de commutation, dans lequel le second transistor de commutation (Q_{H}) est activé après que le premier transistor de commutation (Q_{L}) ait été désactivé pendant un temps mort ; et un N^{ème} moment d'activation du premier transistor de commutation à un (N+1)^{ème} moment d'activation du premier transistor de commutation est un cycle de commutation, et N est un nombre entier positif supérieur ou égal à 1 ; et
le circuit de commande est en outre configuré pour commander, sur la base d'une quantité de temps d'oscillation (n) d'une tension oscillante du redresseur synchrone dans un premier cycle de commutation, le redresseur synchrone devant être activé ou désactivé dans un second cycle de commutation, dans lequel le second cycle de commutation est un cycle de commutation suivant adjacent au premier cycle de commutation ;
dans lequel le convertisseur comprend en outre un circuit de détection, et le circuit de détection est connecté en parallèle au redresseur synchrone ;
le circuit de détection comprend un réseau résistif et un réseau capacitif, et le réseau résistif et le réseau capacitif sont connectés en série ; et
le circuit de détection est configuré pour déterminer la tension oscillante du redresseur synchrone sur la base d'une tension du réseau résistif ;
dans lequel le circuit de commande est spécifiquement configuré pour :
déterminer que le redresseur synchrone est désactivé et détecter la tension oscillante du redresseur synchrone dans le premier cycle de commutation ;
déterminer qu'une valeur de tension de la tension oscillante du redresseur synchrone dépasse un premier seuil (Va, Vb), et commander un temporisateur pour démarrer la synchronisation ;
déterminer que la valeur de tension de la tension oscillante du redresseur synchrone dépasse un second seuil (Va, Vb), et indiquer au temporisateur d'arrêter la synchronisation ;
dans lequel le circuit de commande est configuré pour :
déterminer le fait de savoir si la valeur de temps (T) comptée par le temporisateur est supérieure ou inférieure à un seuil de temps prédéfini (thold), et
si ladite valeur de temps (T) comptée par le temporisateur est supérieure au seuil de temps prédéfini (thold), commander l'activation du redresseur synchrone dans le second cycle de commutation lorsque le premier transistor de commutation (Q_{L}) est désactivé ; et
si ladite valeur de temps (T) comptée par le temporisateur est inférieure au seuil de temps prédéfini (thold), réinitialiser le temporisateur pour réaliser une resynchronisation après avoir été réinitialisé, mettre à jour une quantité de temps de réinitialisation (n) du temporisateur, et déterminer le quantité de temps de réinitialisation (n) comme quantité de temps d'oscillation de la tension oscillante aux deux extrémités du redresseur synchrone dans le premier cycle de commutation ; et dans lequel le circuit de commande est en outre configuré pour : commander l'arrêt du redresseur synchrone lors du second cycle de commutation, si la quantité de temps d'oscillation (n) de la tension oscillante du redresseur synchrone est supérieure à une quantité prédéfinie de temps (Nset) dans le premier cycle de commutation ; ou
commander l'activation du redresseur synchrone dans le second cycle de commutation lorsque le premier transistor de commutation (Q_{L}) est désactivé, si la quantité de temps d'oscillation (n) de la tension oscillante du redresseur synchrone est inférieure ou égale à une quantité prédéfinie de temps (Nset) dans le premier cycle de commutation.

7. Commande de convertisseur pour commander un convertisseur selon la revendication 1, dans laquelle le premier transistor de commutation et le second transistor de commutation sont commandés pour être activés ou désactivés, dans laquelle le second transistor de commutation (Q₂) est activé après que le premier transistor de commutation (Qmain) est désactivé pendant un temps mort, et un N^{ème} moment d'activation du premier transistor de commutation à un (N+1)^{ème} moment d'activation du second transistor de commutation est un cycle de commutation, N étant un nombre entier positif supérieur ou égal à 1, et dans lequel un second cycle de commutation est un cycle de commutation suivant adjacent à un premier cycle de commutation ; le procédé comprenant :
la détection d'une quantité de temps d'oscillation (n) d'une tension oscillante aux deux extrémités du redresseur synchrone (SR) dans le premier cycle de commutation par :
la détermination que le redresseur synchrone est désactivé et la détection de la tension oscillante du redresseur synchrone dans le premier cycle de commutation ;
la détermination qu'une valeur de tension de la tension oscillante à deux côtés du redresseur synchrone dépasse un premier seuil (Va, Vb), et la commande d'un temporisateur pour démarrer la synchronisation ;
la détermination que la valeur de tension de la tension oscillante à deux côtés du redresseur synchrone dépasse un second seuil (Va, Vb), et l'indication au temporisateur d'arrêter la synchronisation ;
dans lequel le procédé comprend :
la détermination du fait de savoir si la valeur de temps (T) comptée par le temporisateur est supérieure ou inférieure à un seuil de temps prédéfini (thold), et
si ladite valeur de temps (T) comptée par le temporisateur est supérieure au seuil de temps prédéfini (thold), la commande du redresseur synchrone pour qu'il soit activé dans le second cycle de commutation lorsque le second transistor de commutation (Q₂) est activé ; et
si ladite valeur de temps (T) comptée par le temporisateur est inférieure au seuil de temps prédéfini (thold), la réinitialisation du temporisateur pour réaliser une resynchronisation après avoir été réinitialisé, la mise à jour d'une quantité de temps de réinitialisation (n) du temporisateur, et la détermination de la quantité de temps de réinitialisation (n) comme quantité de temps d'oscillation de la tension oscillante aux deux extrémités du redresseur synchrone dans le premier cycle de commutation ; et
dans lequel le procédé comprend en outre :
la commande de l'arrêt du redresseur synchrone lors du second cycle de commutation, si la quantité de temps d'oscillation (n) de la tension oscillante du redresseur synchrone est supérieure à une quantité prédéfinie de temps (Nset) dans le premier cycle de commutation ; ou
la commande de l'activation du redresseur synchrone dans le second cycle de commutation lorsque le second transistor de commutation (Q₂) est activé, si la quantité de temps d'oscillation (n) de la tension oscillante du redresseur synchrone est inférieure ou égale à la quantité prédéfinie de temps (Nset) dans le premier cycle de commutation.

8. Adaptateur de puissance, dans lequel l'adaptateur de puissance comprend le convertisseur selon l'une quelconque des revendications 1 à 6.
